# EUROPEAN PATENT APPLICATION

(11) **EP 4 672 461 A1**
(43) Date of publication of application: **31.12.2025**
(21) Application number: 24847490.0
(22) Date of filing: 09.01.2024
(51) Int. Cl.: H01M 50/244

(54) **SUPPORT, BATTERY CELL, BATTERY AND ELECTRIC DEVICE**

(30) Priority: 28.07.2023 CN 202322017388 U
(71) Applicant: Contemporary Amperex Technology Co., Limited, Ningde, Fujian 352100 (CN)
(72) Inventor: LUO, Weijie, Ningde, Fujian 352100 (CN); LIN, Wenfa, Ningde, Fujian 352100 (CN); ZHANG, Shengwu, Ningde, Fujian 352100 (CN); TANG, Minghao, Ningde, Fujian 352100 (CN); HUANG, Biao, Ningde, Fujian 352100 (CN)
(74) Representative: Gong, Jinping
(86) International application number: PCT/CN2024/071349
(87) International publication number: WO 2025/025519

(57) **Abstract**

A bracket, a battery cell, a battery, and a power consuming apparatus are provided. The bracket includes: a bracket body, provided with a through hole, where the through hole is used to expose a part of an electrode terminal; and a first guide portion, disposed in the bracket body and configured to guide a conductive portion of an electrode assembly to run through the through hole to be connected to the electrode terminal. The first guide portion is disposed on the bracket body, so that in a process in which the electrode assembly is assembled into a housing of the battery cell, the first guide portion may provide guidance on and protect the conductive portion of the electrode assembly, to enable the conductive portion of the electrode assembly to gradually enter the through hole, thereby reducing a probability that the conductive portion collides with the bracket body, reducing a risk that the electrode assembly fails and is damaged, and improving reliability and stability of the battery cell.

## Description

### CROSS-REFERENCE TO RELATED APPLICATIONS

The present application claims priority to Chinese Patent Application No. 202322017388.3, filed with the China National Intellectual Property Administration on July 28, 2023, which is incorporated herein by reference in its entirety.

### TECHNICAL FIELD

The present application relates to the battery field, and specifically, to a bracket, a battery cell, a battery, and a power consuming apparatus.

### BACKGROUND

Energy conservation and emission reduction are keys to sustainable development of the automobile industry, and due to advantages of energy conservation and environmental protection, electric vehicles become an important part of the sustainable development of the automobile industry. For the electric vehicles, a battery technology is also an important factor related to the development of the electric vehicles. In the related art, reliability of a battery cell is to be improved, which hinders further improvement of reliability of a battery.

### SUMMARY

In view of the foregoing problem, the present application provides a bracket with high reliability, a battery cell, a battery, and a power consuming apparatus.

According to a first aspect, the present application provides a bracket, including: a bracket body, provided with a through hole, where the through hole is used to expose a part of an electrode terminal; and a first guide portion, disposed in the bracket body and configured to guide a conductive portion of an electrode assembly to run through the through hole to be connected to the electrode terminal.

In the technical solutions of embodiments of the present application, the first guide portion is disposed on the bracket body, so that in a process in which the electrode assembly is assembled into a housing of a battery cell, the first guide portion may provide guidance on and protect the conductive portion of the electrode assembly, to enable the conductive portion of the electrode assembly to gradually enter the through hole, thereby reducing a probability that the conductive portion collides with the bracket body, reducing a risk that the electrode assembly fails and is damaged, and improving reliability and stability of the battery cell.

In some embodiments, the first guide portion includes a first guide sheet, and the first guide sheet obliquely extends in a direction away from the bracket body; and the first guide sheet is configured to be capable of moving toward a direction close to the bracket body under an action of the electrode assembly, to be pressed between the electrode assembly and the electrode terminal. In the foregoing technical solution, the first guide sheet may guide the conductive portion of the electrode assembly to run through the through hole, to facilitate a connection between the conductive portion and the electrode terminal, reduce a risk that the conductive portion is damaged or a risk that the conductive portion fails to be assembled into the housing, and help improve reliability and stability of the battery cell. In addition, the first guide sheet may isolate an end surface of the electrode assembly and the electrode terminal, thereby further improving the reliability and the stability of the battery cell.

In some embodiments, the first guide sheet is disposed on a first side of the bracket body in an axial direction of the through hole and an angle between the first guide sheet and a surface on the first side of the bracket body is less than or equal to 75°. In the foregoing technical solution, a risk that the conductive portion of the electrode assembly directly collides with an edge at one end of the first guide sheet can be reduced, and a probability that the first guide sheet is broken or wrinkled can be reduced. In this way, the first guide sheet can better play a guiding role, so that the conductive portion of the electrode assembly gradually enters the through hole, and the first guide sheet can better isolate the end surface of the electrode assembly from the electrode terminal, thereby further improving the reliability and the stability of the battery cell.

In some embodiments, the first guide portion further includes a first connecting sheet, a first end of the first connecting sheet in a first direction is connected to the bracket body, a second end of the first connecting sheet in the first direction extends toward a center position of the through hole and is connected to the first guide sheet, and the first guide sheet is configured to be capable of moving toward the direction of the bracket body under the action of the electrode assembly, to be pressed between the electrode assembly and the first connecting sheet. In the foregoing technical solution, the first guide sheet may guide the conductive portion of the electrode assembly to run through the through hole, to facilitate a connection between the conductive portion and the electrode terminal, reduce a risk that the conductive portion is damaged or a risk that the conductive portion fails to be assembled into the housing, and help improve reliability and stability of the battery cell. In addition, the first guide sheet and the first connecting sheet may isolate the end surface of the electrode assembly from the electrode terminal, thereby further improving the reliability and stability of the battery cell.

In some embodiments, the first connecting sheet and the first guide sheet are integrally formed. The first connecting sheet and the first guide sheet are integrally formed, so that not only connection reliability between the first connecting sheet and the first guide sheet can be ensured, but also a connection structure between the first connecting sheet and the first guide sheet can be omitted. This simplifies processing steps of the bracket, and further improves production efficiency of the bracket.

In some embodiments, both a thickness of the first guide sheet and a thickness of the first connecting sheet are less than a thickness of the bracket body. The first guide sheet and the first connecting sheet may be more easily deformed relative to the bracket body, to reduce stopping forces of the first guide sheet and the first connecting sheet on the electrode assembly, and reduce a risk that the electrode assembly fails and is damaged, thereby facilitating improving the reliability and the stability of the battery cell. In addition, a space occupied by the first guide portion in a thickness direction of the bracket body may be reduced, waste of an internal space of the housing is reduced, and utilization of the internal space of the housing is improved as a whole.

In some embodiments, the first end of the first connecting sheet is connected to the surface on the first side of the bracket body in the axial direction of the through hole. When the electrode assembly is mounted in position in the housing, the first connecting sheet may be at least partially pressed between the bracket body and the electrode assembly, to reduce a risk that the bracket is directly pressed against the end surface of the electrode assembly, reduce a risk that the electrode assembly fails and is damaged, and further improve the reliability and the stability of the battery cell.

In some embodiments, the first connecting sheet is located in the through hole and the first end of the first connecting sheet is connected to a hole wall of the through hole. The first connecting sheet is disposed in the through hole, so that a space in the through hole is effectively used, which can reduce the space occupied by the first guide portion in the thickness direction of the bracket body, reduce waste of an internal space of the housing, and improve utilization of the internal space of the housing as a whole.

In some embodiments, there is a gap between two side edges of the first connecting sheet that are disposed opposite to each other in a second direction and the hole wall of the through hole. In a process in which the electrode assembly is assembled into the housing of the battery cell, when guiding the conductive portion to run through the through hole, the first guide sheet may be deformed under a stopping action of the electrode assembly to be pressed against the first connecting sheet. Subsequently, the end surface of the electrode assembly may further stop deformation of the first guide sheet and the first connecting sheet, so that the first guide sheet and the first connecting sheet are accommodated in the through hole, to further reduce the space occupied by the first guide portion in the thickness direction of the bracket body, reduce the waste of the internal space of the housing, and further improve utilization of the internal space of the housing.

In some embodiments, the bracket further includes: a second guide portion, disposed on the bracket body and disposed opposite to the first guide portion, and configured to guide the conductive portion of the electrode assembly to run through the through hole to be connected to the electrode terminal. In the foregoing technical solution, the first guide portion and the second guide portion are disposed on the bracket body, so that in a process in which the electrode assembly is assembled into the housing of the battery cell, at least one of the first guide portion and the second guide portion may provide guidance on and protect the conductive portion of the electrode assembly, to enable the conductive portion of the electrode assembly to gradually enter the through hole, thereby reducing a probability that the conductive portion collides with the bracket body, reducing a risk that the electrode assembly fails and is damaged, and improving the reliability and the stability of the battery cell.

In some embodiments, the second guide portion includes a second guide sheet, and the second guide sheet obliquely extends in the direction away from the bracket body; and the second guide sheet is configured to be capable of moving toward the direction close to the bracket body under the action of the electrode assembly, to be pressed between the electrode assembly and the electrode terminal. In the foregoing technical solution, the second guide sheet may guide the conductive portion of the electrode assembly to run through the through hole, to facilitate a connection between the conductive portion and the electrode terminal, reduce a risk that the conductive portion is damaged or a risk that the conductive portion fails to be assembled into the housing, and help improve reliability and stability of the battery cell. In addition, the second guide sheet may isolate the end surface of the electrode assembly from the electrode terminal, thereby further improving the reliability and stability of the battery cell.

In some embodiments, a via that is in communication with the through hole is defined between the second guide sheet and the first guide sheet, and the second guide sheet and the first guide sheet obliquely extend in a direction away from the via. The first guide sheet and the second guide sheet are disposed in such a manner, so that in a process in which the electrode assembly is assembled into the housing of the battery cell, the conductive portion first enters the via under guiding of the first guide sheet or the second guide sheet, and the conductive portion can better run through the through hole, to facilitate a connection between the conductive portion and the electrode terminal, reduce a risk that the conductive portion is damaged or a risk that the conductive portion fails to be assembled into the housing, and further improve the reliability and the stability of the battery cell.

In some embodiments, the via is an elongated hole, and the first guide sheet and the second guide sheet are disposed opposite to each other in a width direction of the elongated hole. A shape of the via may match a cross-sectional shape of the conductive portion, so that the guide portion may run through the slender via, to reduce the risk that the conductive portion fails to be assembled into the housing.

In some embodiments, the second guide portion further includes a second connecting sheet, a first end of the second connecting sheet in the first direction is connected to the bracket body, a second end of the second connecting sheet in the first direction extends toward the center position of the through hole and is connected to the second guide sheet, and the second guide sheet is configured to be capable of moving toward the direction of the bracket body under the action of the electrode assembly, to be pressed between the electrode assembly and the second connecting sheet. In the foregoing technical solution, the second guide sheet may guide the conductive portion of the electrode assembly to run through the through hole, to facilitate a connection between the conductive portion and the electrode terminal, reduce a risk that the conductive portion is damaged or a risk that the conductive portion fails to be assembled into the housing, and help improve reliability and stability of the battery cell. In addition, the second guide sheet and the second connecting sheet may isolate the end surface of the electrode assembly from the electrode terminal, thereby further improving the reliability and stability of the battery cell.

In some embodiments, a structure of the first guide portion is the same as a structure of the second guide portion, which not only can make processing of the bracket more convenient, but also only needs to align the electrode assembly to an opening of the housing body of the housing and mount the electrode assembly. Therefore, a mounting angle of the electrode assembly does not need to be adjusted for many times, which helps improve mounting efficiency of the electrode assembly.

According to a second aspect, the present application provides a battery cell, including a housing, where an electrode terminal is disposed on the housing, the housing includes a housing cover and a housing body having an opening, and the housing cover covers the opening; an electrode assembly, including a conductive portion and an active substance coated portion disposed in the housing, where the conductive portion is electrically connected to the active substance coated portion and the electrode terminal; and a bracket, where the bracket is the bracket in any one of the foregoing embodiments, and the bracket is disposed in the housing body and is located at one end of the active substance coated portion away from the housing cover, where the electrode terminal includes a first electrode terminal, the first electrode terminal is disposed on a wall body of the housing body opposite to the housing cover, the conductive portion includes a first conductive portion, the first conductive portion is disposed at one end of the active substance coated portion away from the housing cover, the first conductive portion runs through a through hole and is electrically connected to the first electrode terminal, and a first guide portion is located between the active substance coated portion and the first electrode terminal.

In the technical solution of the embodiments of the present application, the foregoing bracket is used, so that in a process in which the electrode assembly is assembled into the housing of the battery cell, the first guide portion of the bracket may provide guidance on and protect the conductive portion of the electrode assembly, to enable the conductive portion of the electrode assembly to gradually enter the through hole, thereby reducing a probability that the conductive portion collides with the bracket body of the bracket, reducing a risk that the electrode assembly fails and is damaged, and improving reliability and stability of the battery cell.

In some embodiments, an accommodating portion is disposed on the first electrode terminal, and the first conductive portion is at least partially accommodated in the accommodating portion and is electrically connected to the first electrode terminal. Because the accommodating portion is disposed on the first electrode terminal, a hollow structure of the accommodating portion can reduce a weight of the first electrode terminal to some extent, to improve a weight energy density of the battery cell and the battery. In addition, the first conductive portion can be accommodated in the accommodating portion, thereby improving assembly efficiency of the first conductive portion, further saving the space occupied by the first conductive portion, and fully using the space of the battery cell. In this way, cooperation between the bracket and the first electrode terminal and cooperation between the bracket and the first conductive portion are closer and more reliable, so that a structure of the battery cell is more compact, thereby further facilitating improvement of the energy density of the battery cell.

In some embodiments, the accommodating portion includes a first accommodating groove, a surface of the first electrode terminal that is on a side facing the active substance coated portion is an electrode terminal inner end surface, a notch of the first accommodating groove is formed on the electrode terminal inner end surface, and the first conductive portion is at least partially accommodated in the first accommodating groove. In the foregoing technical solution, providing the first accommodating groove on the first electrode terminal can reduce a weight of the first electrode terminal to some extent, to improve the weight energy density of the battery cell and the battery. In addition, the notch of the first accommodating groove is formed on the electrode terminal inner end surface, and the electrode terminal inner end surface is a surface of the first electrode terminal that is on a side close to the active substance coated portion, so that the first accommodating groove may be open toward the direction of the active substance coated portion, to facilitate the first conductive portion to extend into the first accommodating groove, thereby improving the assembly efficiency. In addition, the first accommodating groove in this form is processed, thereby improving production efficiency. In addition, the first accommodating groove is easily processed to have a relatively large volume, and can accommodate more first conductive portions. In addition, because the first accommodating groove is open toward the direction of the active substance coated portion, the first accommodating groove may further serve as a buffering and temporary storage structure of an electrolyte solution, so that the housing can accommodate more electrolyte solutions. Because the electrolyte solution is lost in a charging/discharging process of the battery cell, a service life of the battery cell can be prolonged when the battery cell has more electrolyte solutions. In addition, because the first accommodating groove is open toward the direction of the active substance coated portion, the first accommodating groove may also serve as an accommodating and buffering structure for generated gas inside the electrode assembly, to reduce expansion of the battery cell, and improve the reliability and the stability of the battery cell. In addition, because the first accommodating groove is located on an inner side of the first electrode terminal, foreign object impurities outside do not easily enter the first accommodating groove, so that impact of the foreign object impurities on the electrode assembly can be reduced, and stability and reliability of operation of the electrode assembly can be improved, thereby improving the stability and the reliability of the battery cell and the battery.

In some embodiments, the accommodating portion includes a second accommodating groove, a surface of the first electrode terminal that is on a side away from the active substance coated portion is an electrode terminal outer end surface, a notch of the second accommodating groove is formed on the electrode terminal outer end surface, the second accommodating groove is in communication with inside of the housing through a piercing, and the first conductive portion runs through the piercing and is at least partially accommodated in the second accommodating groove. In the foregoing technical solution, providing the second accommodating groove on the first electrode terminal can reduce a weight of the first electrode terminal to some extent, to improve the weight energy density of the battery cell and the battery. In addition, the notch of the second accommodating groove is formed on the electrode terminal outer end surface, and the electrode terminal outer end surface is a surface of the first electrode terminal that is on a side away from the active substance coated portion, so that the second accommodating groove may be open in a direction facing away from the active substance coated portion. In this way, when the first conductive portion is at least partially accommodated in the second accommodating groove, accommodation and collation of the first conductive portion may be easily implemented through the notch of the second accommodating groove, and an electrical connection operation or the like on the first conductive portion and the first electrode terminal may be easily implemented through the notch of the second accommodating groove, thereby reducing production difficulty of the battery cell, and improving the production efficiency of the battery cell. In addition, because the second accommodating groove can be in communication with the inside of the housing through a piercing, the second accommodating groove may further serve as a buffering and temporary storage structure of the electrolyte solution, so that the housing can accommodate more electrolyte solutions. Because the electrolyte solution is lost in a charging/discharging process of the battery cell, a service life of the battery cell can be prolonged when the battery cell has more electrolyte solutions. In addition, because the second accommodating groove can be in communication with the inside of the housing through the piercing, the second accommodating groove may also serve as an accommodating and buffering structure for generated gas inside the electrode assembly, to reduce expansion of the battery cell, and improve the reliability and the stability of the battery cell.

In some embodiments, a part of a projection of the first guide portion on a plane on which the piercing is located is located in the piercing. The first conductive portion runs through the piercing under guiding of the first guide portion, to facilitate a connection between the first conductive portion and the first electrode terminal, so as to further reduce a probability that the first conductive portion collides with the first electrode terminal, reduce a risk that the electrode assembly fails and is damaged, and improve the reliability and the stability of the battery cell.

In some embodiments, there are two first electrode terminals, and two through holes are provided on the bracket. In a process in which the electrode assembly is assembled into the housing of the battery cell, two first guide portions on the bracket body may simultaneously provide guidance on and protect the two first conductive portions of the electrode assembly, so that the two first conductive portions may simultaneously enter through holes at corresponding positions, to facilitate a connection between each first conductive portion and the first electrode terminal at a corresponding position, which is beneficial to improving the production efficiency.

According to a third aspect, the present application provides a battery, including the battery cell in the foregoing embodiments. In the technical solution of the embodiments of the present application, reliability and stability of the battery can be improved by using the battery cell.

According to a fourth aspect, the present application provides a power consuming apparatus, where the power consuming apparatus includes the battery cell in the foregoing embodiments; or the power consuming apparatus includes the battery in the foregoing embodiments. In the technical solutions of the embodiments of the present application, the foregoing battery or battery cell is used, so that reliability and stability of the power consuming apparatus can be improved.

The foregoing descriptions are only an overview of the technical solution of the present application. In order to better understand the technical means of the present application, it can be practiced in accordance with the contents of the descriptions, and in order to make the above and other objects, features and advantages of the present application more apparent and easy to understand, specific implementations of the present application are set forth below.

### BRIEF DESCRIPTION OF THE DRAWINGS

Various other advantages and benefits will become clear to a person of ordinary skill in the art by reading the following detailed descriptions of exemplary implementations. The accompanying drawings are only for the purpose of illustrating the preferred implementations and are not construed as limiting the present application. In addition, in all the accompanying drawings, same components are indicated by the same reference numerals. In the accompanying drawings,
FIG. 1 is a schematic diagram of a structure of a vehicle according to some embodiments of the present application;
FIG. 2 is an exploded diagram of a structure of a battery according to some embodiments of the present application;
FIG. 3 is a perspective view of a battery cell according to some embodiments of the present application;
FIG. 4 is a cross-sectional view of a structure of a battery cell according to some embodiments of the present application;
FIG. 5 is a schematic diagram of a structure of a bracket according to some embodiments of the present application;
FIG. 6 is a cross-sectional view of a structure of a battery cell according to some embodiments of the present application;
FIG. 7 is an enlarged diagram of the battery cell shown in FIG. 6;
FIG. 8 is a schematic diagram of a structure of a bracket according to some other embodiments of the present application;
FIG. 9 is a schematic diagram of a structure of a bracket according to some other embodiments of the present application;
FIG. 10 is a cross-sectional view of a structure of a battery cell according to some other embodiments of the present application;
FIG. 11 is an enlarged diagram of the battery cell shown in FIG. 10;
FIG. 12 is a schematic diagram of a structure of a bracket according to some other embodiments of the present application;
FIG. 13 is a local cross-sectional view of a battery cell according to some embodiments of the present application;
FIG. 14 is a local cross-sectional view of a battery cell according to some embodiments of the present application;
FIG. 15 is a local cross-sectional view of a battery cell according to some embodiments of the present application;
FIG. 16 is a local cross-sectional view of a battery cell according to some embodiments of the present application;
FIG. 17 is a local cross-sectional view of a battery cell according to some embodiments of the present application; and
FIG. 18 is a local cross-sectional view of a battery cell according to some embodiments of the present application.

Reference numerals in specific implementations are as follows: Power consuming apparatus 1000, battery 100, controller 200, motor 300, first direction Z, second direction X, third directionY, axial direction R of an electrode terminal, battery cell 10, box 20, first portion 201, second portion 202, housing 11, housing body 111, opening 1110, housing cover 112, mounting hole 113, electrode terminal 12, first electrode terminal 120, accommodating portion 121, first accommodating groove 12110, first end wall 12111, first depressed groove 12112, first side wall 12113, second accommodating groove 12120, second end wall 12121, second depressed groove 12122, second side wall 12123, piercing 12130, electrode terminal inner end surface 122, electrode terminal outer end surface 123, first groove 126, spacing portion 127, cover plate 13, first conductive member 131, second groove 1311, second conductive member 132, electrode assembly 2, active substance coated portion 21, conductive portion 22, first conductive portion 221, bracket 3, via 30, bracket body 31, through hole 310, breathable hole 311, first side surface 3121, second side surface 3122, first guide portion 32, first guide sheet 321, first connecting sheet 322, second guide portion 33, second guide sheet 331, second connecting sheet 332, and groove cover 7.

### DETAILED DESCRIPTION

Embodiments of the technical solution of the present application will be described in detail with reference to the accompanying drawings. The following embodiments are only intended to more clearly illustrate the technical solutions of the present application and are therefore intended as examples only and are not intended to limit the scope of protection of the present application.

Unless otherwise defined, all technical and scientific terms used herein have the same meanings as are commonly understood by a person skilled in the art of the present application. Terms used herein are for the purpose of describing specific embodiments only and are not intended to limit the present application. The terms "comprising" and "having" and any variations thereof in the descriptions and claims of the present application and the foregoing descriptions of the accompanying drawings are intended to cover non-exclusive inclusion. In the descriptions of the embodiments of the present application, the technical terms "first", "second", and the like are used only to distinguish different objects and are not understood to indicate or imply relative importance or to imply the number, specific order or primary and secondary relationship of the indicated technical features. In the descriptions of the embodiments of the present application, "a plurality of" means two or more, unless otherwise expressly and specifically defined.

"Embodiment" mentioned in the specification means that particular features, structures, or characteristics described with reference to the embodiment may be included in at least one embodiment of the present application. The term appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments. In the descriptions of the embodiments of the present application, the term "and/or" herein is simply a description of the association relationship of the associated objects, indicating that three relationships can exist, for example, A and/or B may indicate that A exists alone, A and B exist at the same time, and B exists alone. In addition, the character "/" in this specification generally indicates an "or" relationship between the associated objects.

In the descriptions of the embodiments of the present application, the term "a plurality of" means two or more (including two). Similarly, "a plurality of groups" means two or more groups (including two groups), and "a plurality of pieces" means two or more pieces (including two pieces). In the descriptions of the embodiments of the present application, the directions or positional relationships indicated by the technical terms such as "center", "length", "width", "thickness", "upper", "lower", "bottom", "inside", "outside", and "axial" are only for the convenience of describing the embodiments of the present application and simplifying the descriptions, rather than indicating or implying that the involved apparatus or element should have a specific orientation or should be configured or operated in the specific orientation, therefore, they cannot be understood as limiting the embodiments of the present application.

In the descriptions of the embodiments of the present application, unless otherwise explicitly provided and limited, the technical terms such as "mount", "connect", "couple", and "fix" should be understood broadly, which, for example, may refer to a fixed connection, a detachable connection, or an integral connection; which may refer to a mechanical connection or an electrical connection; which may refer to a direct connection or an indirect connection via an intermediate medium; which may also refer to a communication between the insides of two elements. A person of ordinary skill in the art may understand the specific meanings of the foregoing terms in the embodiments of the present application according to specific situations.

Nowadays, from the perspective of development of the market situation, the power batteries are applied increasingly. The power batteries are not only used in energy storage power systems such as water power plant, fire power plant, wind power plant and solar power plant, but also in electric transportations such as electric bicycles, electric motorcycles, electric vehicles, as well as in military equipment, aerospace and other fields. With continuous expansion of application fields of the power batteries, market demands for the power batteries are also expanding.

In a battery cell in the related art, an electrode terminal is disposed on a housing of the battery cell. During assembly of the battery cell, an electrode assembly with a conductive portion is usually assembled into the housing from an opening of a housing body. However, in a process of assembling the electrode assembly into the housing from the opening, the conductive portion easily collides with the housing or another structure in the housing. Consequently, the conductive portion is damaged or cannot be normally assembled into the housing, affecting use reliability of the battery cell.

To reduce damage caused by the housing or another structure in the housing to the conductive portion in a process in which the electrode assembly is assembled into the housing, in the present application, a first guide portion is disposed on a bracket body in the housing. In a process of assembling the electrode assembly into the housing, the first guide portion may provide guidance on and protect the conductive portion of the electrode assembly, so that the conductive portion of the electrode assembly gradually enters a through hole, to reduce a probability that the conductive portion collides with the bracket body, reduce a risk that the electrode assembly fails and is damaged, and improve the reliability and stability of the battery cell.

The battery cell disclosed in the embodiments of the present application can be used in a power consuming apparatus using a battery as a power supply or various energy storage systems using batteries as energy storage elements. The power consuming apparatus may be, but is not limited to a mobile phone, a tablet computer, a notebook computer, an electric toy, an electric tool, an electric bicycle, an electric vehicle, a ship, a spacecraft, or the like. The electric toy may include a fixed or mobile electric toy, such as a game console, an electric vehicle toy, an electric ship toy, or an electric airplane toy. The spacecraft may include an airplane, a rocket, a space shuttle, a spaceship, or the like.

For ease of description, the following embodiment is described by using an example in which a power consuming apparatus 1000 in an embodiment of the present application is a vehicle.

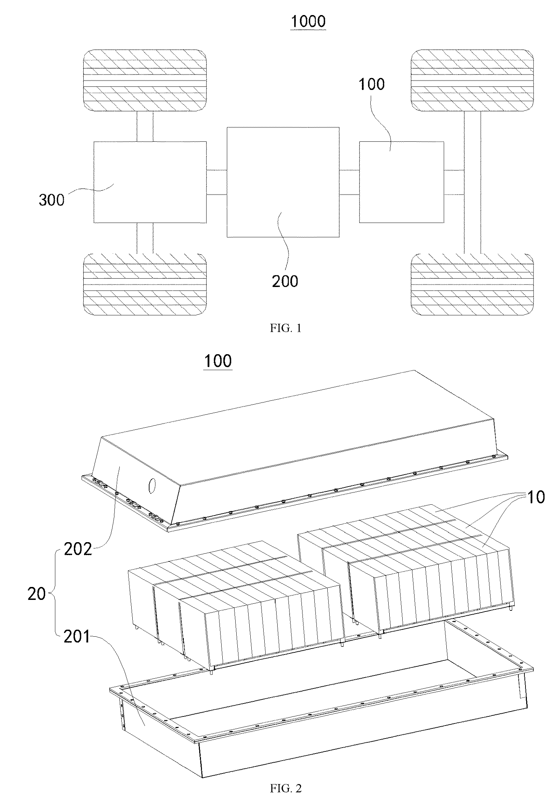

Referring to FIG. 1, FIG. 1 is a schematic diagram of a structure of a vehicle according to some embodiments of the present application. The vehicle may be an oil-fueled vehicle, a gas-powered vehicle, or a new energy vehicle. The new energy vehicle may be a battery electric vehicle, a hybrid electric vehicle, an extended-range electric vehicle, or the like. The battery 100 is disposed inside the vehicle, and the battery 100 may be disposed at a bottom, head, or tail of the vehicle. The battery 100 may be configured to supply electricity to the vehicle. For example, the battery 100 may serve as an operating power supply of the vehicle. The vehicle may further include a controller 200 and a motor 300, where the controller 200 is configured to control the battery 100 to supply electricity to the motor 300 to be used for, for example, operating electricity requirements during start-up, navigation and running of the vehicle.

In some embodiments of the present application, the battery 100 may not only serve as the operating power supply for the vehicle, but also serve as a driving power supply for the vehicle, to replace or partially replace fuel or natural gas to provide driving power for the vehicle.

Referring to FIG. 2, FIG. 2 is an exploded view of a battery 100 according to some embodiments of the present application. The battery 100 includes a box 20 and battery cells 10, where the battery cells 10 are accommodated in the box 20. The box 20 is configured to provide an accommodating space for the battery cells 10. The box 20 may use a plurality of structures. In some embodiments, the box 20 may include a first portion 201 and a second portion 202, the first portion 201 and the second portion 202 are mutually covered, and the first portion 201 and the second portion 202 jointly define the accommodating space for accommodating the battery cells 10. The second portion 202 may be a hollow structure with one end open, the first portion 201 may be a plate-shaped structure, and the first portion 201 covers an opening side of the second portion 202, so that the first portion 201 and the second portion 202 jointly define the accommodating space. The first portion 201 and the second portion 202 may also both be hollow structures with one end open, and an opening side of the first portion 201 covers the opening side of the second portion 202. Certainly, the box 20 formed by the first portion 201 and the second portion 202 may be in a plurality of shapes, such as a cylinder or a cuboid.

In the battery 100, there may be a plurality of battery cells 10, and the plurality of battery cells 10 can be connected in series, parallel, or series-parallel. Series-parallel connection means that both series connection and parallel connection exist among the plurality of battery cells 10. The plurality of battery cells 10 may be directly connected in series, parallel, or series-parallel together, and then the whole formed by the plurality of battery cells 10 may be accommodated in the box 20. Certainly, the battery 100 may also be in the form of a battery 100 module formed by the plurality of battery cells 10 that are first connected in series, parallel, or series-parallel. A plurality of battery 100 modules are then connected in series, parallel, or series-parallel to form a whole and accommodated in the box 20. The battery 100 may also include other structures, for example, the battery 100 may also include a bus component for implementing an electrical connection among the plurality of battery cells 10. Each battery cell 10 may be a secondary battery or a primary battery, or may be a lithium-sulfur battery, a sodium-ion battery, or a magnesium-ion battery, but is not limited thereto. The battery cell 10 may be cylindrical, flat, cuboid, or in other shapes.

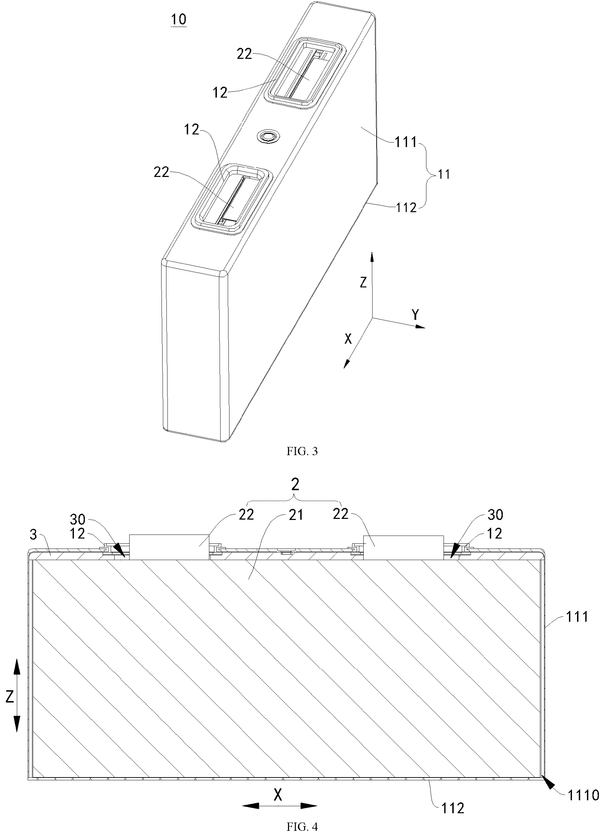

Referring to FIG. 3 and FIG. 4, FIG. 3 is a schematic diagram of an exploded structure of a battery cell 10 according to some embodiments of the present application; and FIG. 4 is a cross-sectional view of a structure of a battery cell 10 according to some embodiments of the present application. The battery cell 10 is a smallest unit forming a battery 100. As shown in FIG. 3, in the figure, a direction X is a length direction of the battery cell 10, a direction Y is a thickness direction of the battery cell 10, and a direction Z is a height direction of the battery cell 10. The battery cell 10 includes a housing 11, an electrode assembly 2, a bracket 3, and another functional component. The housing 11 includes a housing cover 112 and a housing body 111.

The housing cover 112 is a component that covers an opening 1110 of the housing body 111 to isolate an internal environment of the battery cell 10 from an external environment. A shape of the housing cover 112 may be adapted to a shape of the housing body 111 to fit the housing body 111. Optionally, the housing cover 112 may be made of a material with specified hardness and strength (for example, an aluminum alloy), so that the housing cover 112 is less likely to deform under extrusion and collision, enabling the battery cell 10 to have higher structural strength and enhanced reliability. Functional components such as electrode terminals may be disposed on the housing cover 112. The electrode terminals may be configured to be electrically connected to the electrode assembly 2 to output or input electrical energy of the battery cell 10. In some embodiments, the housing cover 112 may also be provided with a pressure relief mechanism configured to relieve internal pressure when the internal pressure or temperature in the battery cell 10 reaches a threshold. The housing cover 112 may also be made of a plurality of materials, such as copper, iron, aluminum, stainless steel, an aluminum alloy, and plastic, which are not particularly limited in the embodiments of the present application. In some embodiments, an insulating member may also be disposed on an inner side of the housing cover 112. The insulating member can be configured to isolate electrical connection components in the housing body 111 from the housing cover 112, to reduce a risk of a short circuit. For example, the insulating member may be made of plastic or rubber.

The housing body 111 is an assembly configured to form an internal environment of the battery cell 10 together with the housing cover 112, where the formed internal environment may be configured to accommodate the electrode assembly 2, an electrolyte solution, and another component. The housing body 111 and the housing cover 112 may be separate components, an opening 1110 may be provided on the housing body 111, and the housing cover 112 covers the opening 1110 at the opening 1110 to form the internal environment of the battery cell 10. Without limitation, the housing cover 112 and the housing body 111 may also be integrated. Specifically, the housing cover 112 and the housing body 111 may first form a shared connection surface before other components are assembled into the housing, and then the housing cover 112 covers the housing body 111 when inside of the housing body 111 needs to be enclosed. The housing body 111 may be of a plurality of shapes and sizes, such as a rectangular shape, a cylindrical shape, and a hexagonal prism shape. Specifically, the shape of the housing body 111 may be determined according to a specific shape and size of the electrode assembly 2. The housing body 111 may be made of a plurality of materials, such as copper, iron, aluminum, stainless steel, an aluminum alloy, and plastic, which are not particularly limited in the embodiments of the present application.

The electrode assembly 2 is a component in the battery cell 10 that undergoes electrochemical reactions. The housing body 111 may include one or more electrode assemblies 2. The electrode assembly 2 is mainly formed by winding or laminating a positive electrode plate and a negative electrode plate, and a separator is usually disposed between the positive electrode plate and the negative electrode plate. Parts of the positive electrode plate and the negative electrode plate with active substances form a body portion of the electrode assembly 2, while parts of the positive electrode plate and the negative electrode plate without active substances separately form tabs. The positive electrode tab and the negative electrode tab may be located at one end of the body portion together or at two ends of the body portion separately. During charging/discharging of the battery 100, a positive electrode active substance and a negative electrode active substance react with an electrolyte solution, and the tabs are connected to the electrode terminals to form a current loop.

The bracket 3 is disposed in the housing body 111, and the bracket 3 is located at one end of the active substance coated portion 21 away from the housing cover 112. The bracket 3 may be of a plate-shaped structure. The bracket 3 may be disposed on a side of the active substance coated portion 21 on which a conductive portion 22 is disposed. An avoidance structure (such as an avoidance groove or a via 30 described below) configured to avoid the conductive portion 22 may be disposed on the bracket 3. The bracket 3 may be further disposed on a side of the active substance coated portion 21 on which no conductive portion 22 is disposed. In this way, the avoidance structure configured to avoid the conductive portion 22 does not need to be disposed on the bracket 3.

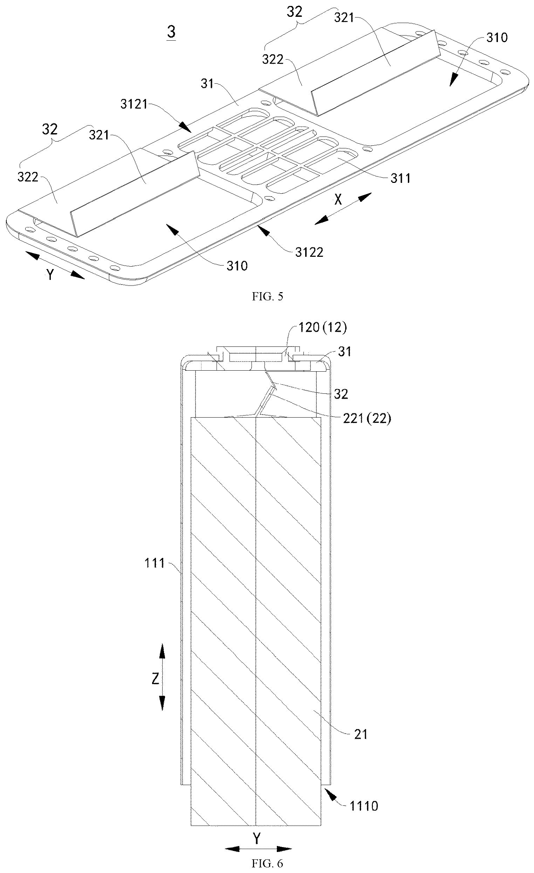

Referring to FIG. 5, FIG. 5 is a schematic diagram of a structure of a bracket 3 according to some embodiments of the present application. The bracket 3 includes a bracket body 31 and a first guide portion 32. The bracket body 31 is provided with a through hole 310, and the through hole 310 is used to expose a part of an electrode terminal 12. The first guide portion 32 is disposed on the bracket body 31, and the first guide portion 32 is configured to guide a conductive portion 22 of an electrode assembly 2 to run through the through hole 310, to facilitate a connection between the conductive portion 22 and the electrode terminal 12.

In the technical solution of embodiments of the present application, the first guide portion 32 is disposed on the bracket body 31, so that in a process in which the electrode assembly 2 is assembled into a housing 11 of a battery cell 10, the first guide portion 32 may provide guidance on and protect the conductive portion 22 of the electrode assembly 2, to enable the conductive portion 22 of the electrode assembly 2 to gradually enter the through hole 310, thereby reducing a probability that the conductive portion 22 collides with the bracket body 31, reducing a risk that the electrode assembly 2 fails and is damaged, and improving reliability and stability of the battery cell 10.

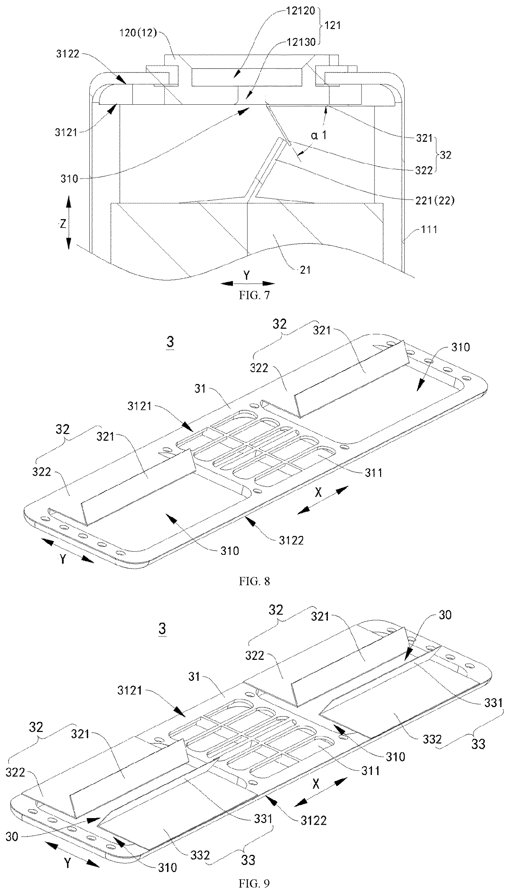

Referring to FIG. 5 again, and further referring to FIG. 6 and FIG. 7, FIG. 6 is a cross-sectional view of a structure of a battery cell 10 according to some embodiments of the present application; and FIG. 7 is an enlarged diagram of the battery cell 10 shown in FIG. 6. The first guide portion 32 includes a first guide sheet 321, and the first guide sheet 321 obliquely extends in a direction away from the bracket body 31. The first guide sheet 321 is configured to be capable of moving toward a direction close to the bracket body 31 under an action of the electrode assembly 2, to be pressed between the electrode assembly 2 and the electrode terminal 12.

Specifically, in a process in which the electrode assembly 2 is assembled into the housing 11 of the battery cell 10, the electrode assembly 2 moves toward a direction close to the bracket 3. When the conductive portion 22 touches the first guide sheet 321, the conductive portion 22 enters the through hole 310 under guiding of the first guide sheet 321, and finally runs through the through hole 310 to facilitate a connection between the conductive portion 22 and the electrode terminal 12, reduce a probability that the conductive portion 22 collides with the bracket body 31, and reduce a risk that the conductive portion 22 is damaged or a risk that the conductive portion 22 fails to be assembled into the housing.

In addition, in a process in which the electrode assembly 2 is assembled into the housing 11 of the battery cell 10, the first guide sheet 321 moves toward the direction close to the bracket body 31 under the action of the electrode assembly 2. When the electrode assembly 2 is mounted in position in the housing 11, the first guide sheet 321 does not need to be extracted, but is pressed between the electrode assembly 2 and the electrode terminal 12, to isolate an end surface of the electrode assembly 2 from the electrode terminal 12, thereby helping improve reliability and stability of the battery cell 10.

In the foregoing technical solution, the first guide sheet 321 may guide the conductive portion 22 of the electrode assembly 2 to run through the through hole 310, to facilitate a connection between the conductive portion 22 and the electrode terminal 12, reduce a risk that the conductive portion 22 is damaged or a risk that the conductive portion 22 fails to be assembled into the housing, and help improve the reliability and the stability of the battery cell 10. In addition, the first guide sheet may isolate the end surface of the electrode assembly 2 from the electrode terminal 12, thereby further improving the reliability and the stability of the battery cell 10.

Referring to FIG. 7 again, the first guide sheet 321 is disposed on a first side of the bracket body 31 in an axial direction of the through hole 310, and an angle α1 between the first guide sheet 321 and a surface 3121 on the first side of the bracket body 31 is less than or equal to 75°. For example, an angle α between the first guide sheet 321 and the surface 3121 on the first side of the bracket body 31 may be 75°, 60°, 45°, 30°, 10°, or the like.

The "axial direction of the through hole 310" refers to a direction perpendicular to a plane on which the through hole 310 is located, namely, a direction Z shown in FIG. 7. The bracket body 31 has a first side surface 3121 and a second side surface 3122 that are disposed opposite to each other in the axial direction of the through hole 310. The first guide sheet 321 is disposed on the surface 3121 on the first side of the bracket body 31.

In the foregoing technical solution, a risk that the conductive portion 22 of the electrode assembly 2 directly collides with an edge on one end of the first guide sheet 321 can be reduced, and a probability that the first guide sheet 321 is broken or wrinkled can be reduced. In this way, the first guide sheet 321 can better play a guiding role, so that the conductive portion 22 of the electrode assembly 2 gradually enters the through hole 310, and the first guide sheet 321 can better isolate the end surface of the electrode assembly 2 from the electrode terminal 12, thereby further improving the reliability and the stability of the battery cell 10.

Referring to FIG. 5 to FIG. 7 again, the first guide portion 32 further includes a first connecting sheet 322. The first connecting sheet 322 has a first end and a second end that are disposed opposite to each other in a first direction. The first end of the first connecting sheet 322 in the first direction is connected to the bracket body 31. The second end of the first connecting sheet 322 in the first direction extends toward a center position of the through hole 310. The second end of the first connecting sheet 322 in the first direction is connected to the first guide sheet 321. The first guide sheet 321 is configured to be capable of moving toward the direction close to the bracket body 31 under the action of the electrode assembly 2, to be pressed between the electrode assembly 2 and the first connecting sheet 322.

In a process in which the electrode assembly 2 is assembled into the housing 11 of the battery cell 10, the first guide sheet 321 moves toward the direction close to the bracket body 31 under the action of the electrode assembly 2. When the electrode assembly 2 is mounted in position in the housing 11, the first guide sheet 321 does not need to be extracted, but is pressed between the electrode assembly 2 and the first connecting sheet 322, and the first connecting sheet 322 is pressed between the first guide sheet 321 and the electrode terminal 12. The first guide sheet 321 and the first connecting sheet 322 may perform double isolation on the end surface of the electrode assembly 2 and the electrode terminal 12, to further improve the reliability and the stability of the battery cell 10.

In the foregoing technical solution, the first guide sheet 321 may guide the conductive portion of the electrode assembly 2 to run through the through hole 310, to facilitate a connection between the conductive portion 22 and the electrode terminal 12, reduce a risk that the conductive portion 22 is damaged or a risk that the conductive portion 22 fails to be assembled into the housing, and help improve the reliability and the stability of the battery cell 10. In addition, the first guide sheet 321 and the first connecting sheet 322 may isolate the end surface of the electrode assembly 2 from the electrode terminal 12, thereby further improving the reliability and the stability of the battery cell 10.

A size of the first guide sheet 321 in the first direction is less than a size of the first connecting sheet 322 in the first direction, so that the first guide sheet 321 approaches the first end of the first connecting sheet 322 to avoid the bracket body 31 as much as possible, which can reduce a space occupied by the first guide portion 32 in a thickness direction of the bracket body 31, reduce waste of an internal space of the housing 11, and improve utilization of the internal space of the housing 11 as a whole.

As an optional solution, the first connecting sheet 322 and the first guide sheet 321 are integrally formed. The first connecting sheet 322 and the first guide sheet 321 are integrally formed, so that not only connection reliability between the first connecting sheet 322 and the first guide sheet 321 can be ensured, but also a connection structure between the first connecting sheet and the first guide sheet can be omitted. This simplifies processing steps of the bracket 3, and further improves production efficiency of the bracket 3.

Both a thickness of the first guide sheet 321 and a thickness of the first connecting sheet 322 are less than a thickness of the bracket body 31. The first guide sheet 321 and the first connecting sheet 322 may be more easily deformed relative to the bracket body 31, to reduce stopping forces of the first guide sheet 321 and the first connecting sheet 322 on the electrode assembly 2, and reduce a risk that the electrode assembly 2 fails and is damaged, thereby facilitating improving the reliability and the stability of the battery cell 10. In addition, a space occupied by the first guide portion 32 in the thickness direction of the bracket body 31 may be reduced, and utilization of the internal space of the housing 11 is improved as a whole.

Referring to FIG. 7 again, the first end of the first connecting sheet 322 is connected to the surface 3121 on the first side of the bracket body 31 in the axial direction of the through hole 310. When the electrode assembly 2 is mounted in position in the housing 11, the first connecting sheet 322 may be at least partially pressed between the bracket body 31 and the electrode assembly 2, to reduce a risk that the bracket 3 is directly pressed against the end surface of the electrode assembly 2, reduce a risk that the electrode assembly 2 fails and is damaged, and further improve the reliability and the stability of the battery cell 10.

Referring to FIG. 8, FIG. 8 is a schematic diagram of a structure of a bracket 3 according to some other embodiments of the present application. The first connecting sheet 322 is located in the through hole 310, and the first end of the first connecting sheet 322 is connected to a hole wall of the through hole 310. A space in the through hole 310 is effectively used, so that the space occupied by the first guide portion 32 in the thickness direction of the bracket body 31 can be reduced, the waste of the internal space of the housing 11 is reduced, and the utilization of the internal space of the housing 11 is improved as a whole.

There is a gap between two side edges of the first connecting sheet 322 that are disposed opposite to each other in a second direction and the hole wall of the through hole 310. The first end of the first connecting sheet 322 in the first direction is connected to the bracket body 31, the second end of the first connecting sheet 322 in the first direction is connected to the first guide sheet 321, and there is a gap between two sides of the first connecting sheet 322 that are oppositely disposed in the second direction and the hole wall of the through hole 310. Therefore, the first connecting sheet 322 may be formed as a cantilever structure with one end being a fixed end and the other end being a free end. In this way, the first connecting sheet 322 may be deformed under an external action.

Specifically, in a process in which the electrode assembly 2 is assembled into the housing 11 of the battery cell 10, when guiding the conductive portion 22 to run through the through hole 310, the first guide sheet 321 may be deformed under a stopping action of the electrode assembly 2 to be pressed against the first connecting sheet 322. Subsequently, the end surface of the electrode assembly 2 may further stop deformation of the first guide sheet 321 and the first connecting sheet 322, so that the first guide sheet 321 and the first connecting sheet 322 are accommodated in the through hole 310, to further reduce the space occupied by the first guide portion 32 in the thickness direction of the bracket body 31, reduce the waste of the internal space of the housing 11, and further improve the utilization of the internal space of the housing 11.

Referring to FIG. 9, FIG. 9 is a schematic diagram of a structure of a bracket 3 according to some other embodiments of the present application. The bracket 3 further includes a second guide portion 33. The second guide portion 33 is disposed on the bracket body 31, and the second guide portion 33 and the first guide portion 32 are disposed opposite to each other. The second guide portion 33 is configured to guide the conductive portion 22 of the electrode assembly 2 to run through the through hole 310, to facilitate the connection between the conductive portion 22 and the electrode terminal 12. In the foregoing technical solution, the first guide portion 32 and the second guide portion 33 are disposed on the bracket body 31, so that in a process in which the electrode assembly 2 is assembled into the housing 11 of the battery cell 10, at least one of the first guide portion 32 and the second guide portion 33 may provide guidance on and protect the conductive portion 22 of the electrode assembly 2, to enable the conductive portion 22 of the electrode assembly 2 to gradually enter the through hole 310, thereby reducing a probability that the conductive portion 22 collides with the bracket body 31, reducing a risk that the electrode assembly 2 fails and is damaged, and improving the reliability and the stability of the battery cell 10.

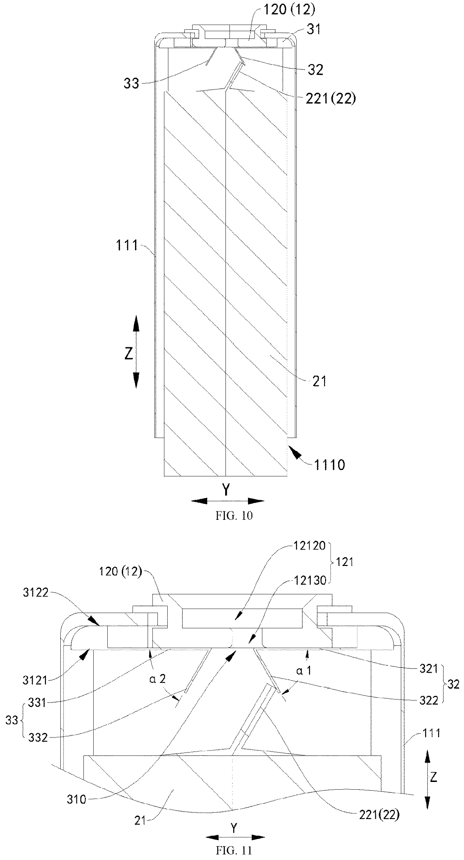

Referring to FIG. 9, and further referring to FIG. 10 and FIG. 11, FIG. 10 is a cross-sectional view of a structure of a battery cell 10 according to some other embodiments of the present application; and FIG. 11 is an enlarged diagram of the battery cell 10 shown in FIG. 10. The second guide portion 33 includes a second guide sheet 331, and the second guide sheet 331 obliquely extends in the direction away from the bracket body 31.

The second guide sheet 331 is configured to be capable of moving toward the direction close to the bracket body 31 under the action of the electrode assembly 2, to be pressed between the electrode assembly 2 and the electrode terminal 12. Specifically, in a process in which the electrode assembly 2 is assembled into the housing 11 of the battery cell 10, the electrode assembly 2 moves toward the direction close to the bracket 3. When the conductive portion 22 touches at least one of the first guide sheet 321 and the second guide sheet 331, the conductive portion 22 enters the through hole 310 under guiding of the first guide sheet 321 or the second guide sheet 331, and finally runs through the through hole 310 to facilitate the connection between the conductive portion 22 and the electrode terminal 12, reduce the probability that the conductive portion 22 collides with the bracket body 31, and reduce the risk that the conductive portion 22 is damaged or the risk that the conductive portion 22 fails to be assembled into the housing.

In addition, in a process in which the electrode assembly 2 is assembled into the housing 11 of the battery cell 10, the first guide sheet 321 and the second guide sheet 331 may move toward the direction close to the bracket body 31 under the action of the electrode assembly 2. When the electrode assembly 2 is mounted in position in the housing 11, the first guide sheet 321 and the second guide sheet 331 do not need to be extracted, but are pressed between the electrode assembly 2 and the electrode terminal 12, to isolate the end surface of the electrode assembly 2 from the electrode terminal 12, thereby helping improve the reliability and the stability of the battery cell 10.

In the foregoing technical solution, the second guide sheet 331 may guide the conductive portion 22 of the electrode assembly 2 to run through the through hole 310, to facilitate the connection between the conductive portion 22 and the electrode terminal 12, reduce the risk that the conductive portion 22 is damaged or the risk that the conductive portion 22 fails to be assembled into the housing, and help improve the reliability and the stability of the battery cell 10. In addition, the first guide sheet may isolate the end surface of the electrode assembly 2 from the electrode terminal 12, thereby further improving the reliability and stability of the battery cell 10.

Referring to FIG. 11 again, a via 30 is defined between the second guide sheet 331 and the first guide sheet 321, the via 30 is in communication with the through hole 310, and the second guide sheet 331 and the first guide sheet 321 obliquely extend in a direction away from the via 30.

The first guide sheet 321 and the second guide sheet 331 are disposed in such a manner, so that in a process in which the electrode assembly 2 is assembled into the housing 11 of the battery cell 10, the conductive portion 22 first enters the via 30 under guiding of the first guide sheet 321 or the second guide sheet 331, and the conductive portion 22 can better run through the through hole 310, to facilitate the connection between the conductive portion 22 and the electrode terminal 12, reduce the risk that the conductive portion 22 is damaged or the risk that the conductive portion 22 fails to be assembled into the housing, and further improve the reliability and the stability of the battery cell 10.

Specifically, an angle α1 between the first guide sheet 321 and a surface 3121 on a first side of the bracket body 31 is less than or equal to 75°. For example, an angle α between the first guide sheet 321 and the surface 3121 on the first side of the bracket body 31 may be 75°, 60°, 45°, 30°, 10°, or the like. An angle α2 between the second guide sheet 331 and the surface 3121 on the first side of the bracket body 31 is less than or equal to 75°. For example, the angle α2 between the second guide sheet 331 and the surface 3121 on the first side of the bracket body 31 may be 75°, 60°, 45°, 30°, 10°, or the like.

In the foregoing technical solution, a risk that the conductive portion 22 of the electrode assembly 2 directly collides with an edge on one end of the first guide sheet 321 and an edge on one end of the second guide sheet 331 can be reduced, and a probability that the first guide sheet 321 and the second guide sheet 331 are broken or wrinkled can be reduced. In this way, the first guide sheet 321 and the second guide sheet 331 can better play a guiding role, so that the conductive portion 22 of the electrode assembly 2 gradually enters the through hole 310, and the first guide sheet 321 and the second guide sheet 331 can better isolate the end surface of the electrode assembly 2 from the electrode terminal 12, to further improve the reliability and the stability of the battery cell 10.

The via 30 is an elongated hole, and the first guide sheet 321 and the second guide sheet 331 are disposed opposite to each other in a width direction of the elongated hole. A shape of the via 30 may match a cross-sectional shape of the conductive portion 22, so that the guide portion may run through the elongated via 30, to reduce the risk that the conductive portion 22 fails to be assembled into the housing.

Referring to FIG. 9 to FIG. 11 again, the second guide portion 33 further includes a second connecting sheet 332, the second connecting sheet 332 is connected to the bracket body 31 on a first end in the first direction, the second connecting sheet 332 extends toward a center position of the through hole 310 on a second end in the first direction, and the second connecting sheet 332 is connected to the second guide sheet 331.

The second guide sheet 331 is configured to be capable of moving toward the direction close to the bracket body 31 under the action of the electrode assembly 2, to be pressed between the electrode assembly 2 and the second connecting sheet 332. In a process in which the electrode assembly 2 is assembled into the housing 11 of the battery cell 10, the second guide sheet 331 moves toward the direction close to the bracket body 31 under the action of the electrode assembly 2. When the electrode assembly 2 is mounted in position in the housing 11, the second guide sheet 331 does not need to be extracted, but is pressed between the electrode assembly 2 and the second connecting sheet 332, and the second connecting sheet 332 is pressed between the second guide sheet 331 and the electrode terminal 12. The second guide sheet 331 and the second connecting sheet 332 may perform double isolation on the end surface of the electrode assembly 2 and the electrode terminal 12, to further improve the reliability and the stability of the battery cell 10.

**In** the foregoing technical solution, the second guide sheet 331 may guide the conductive portion of the electrode assembly 2 to run through the through hole 310, to facilitate the connection between the conductive portion 22 and the electrode terminal 12, reduce the risk that the conductive portion 22 is damaged or the risk that the conductive portion 22 fails to be assembled into the housing, and help improve the reliability and the stability of the battery cell 10. In addition, the second guide sheet 331 and the second connecting sheet 332 may isolate the end surface of the electrode assembly 2 from the electrode terminal 12, thereby further improving the reliability and stability of the battery cell 10.

Referring to FIG. 9 and FIG. 11 again, a structure of the first guide portion 32 is the same as a structure of the second guide portion 33, which not only can make processing of the bracket 3 more convenient, but also only needs to align the electrode assembly 2 to an opening 1110 of the housing body 111 of the housing 11 and mount the electrode assembly 2. Therefore, a mounting angle of the electrode assembly 2 does not need to be adjusted for many times, which helps improve mounting efficiency of the electrode assembly 2.

Both a thickness of the second guide sheet 331 and a thickness of the second connecting sheet 332 are less than a thickness of the bracket body 31. The second guide sheet 331 and the second connecting sheet 332 may be more easily deformed relative to the bracket body 31, to reduce stopping forces of the second guide sheet 331 and the second connecting sheet 332 on the electrode assembly 2, and reduce a risk that the electrode assembly 2 fails and is damaged, thereby facilitating improving the reliability and the stability of the battery cell 10. In addition, the space occupied by the second guide portion 33 in the thickness direction of the bracket body 31 may be reduced, the waste of the internal space of the housing 11 is reduced, and the utilization of the internal space of the housing 11 is improved as a whole.

Referring to FIG. 11 again, the first end of the second connecting sheet 332 is connected to the surface 3121 on the first side of the bracket body 31 in the axial direction of the through hole 310. When the electrode assembly 2 is mounted in position in the housing 11, the second connecting sheet 332 may be at least partially pressed between the bracket body 31 and the electrode assembly 2, to reduce the risk that the bracket 3 is directly pressed against the end surface of the electrode assembly 2, reduce the risk that the electrode assembly 2 fails and is damaged, and further improve the reliability and the stability of the battery cell 10.

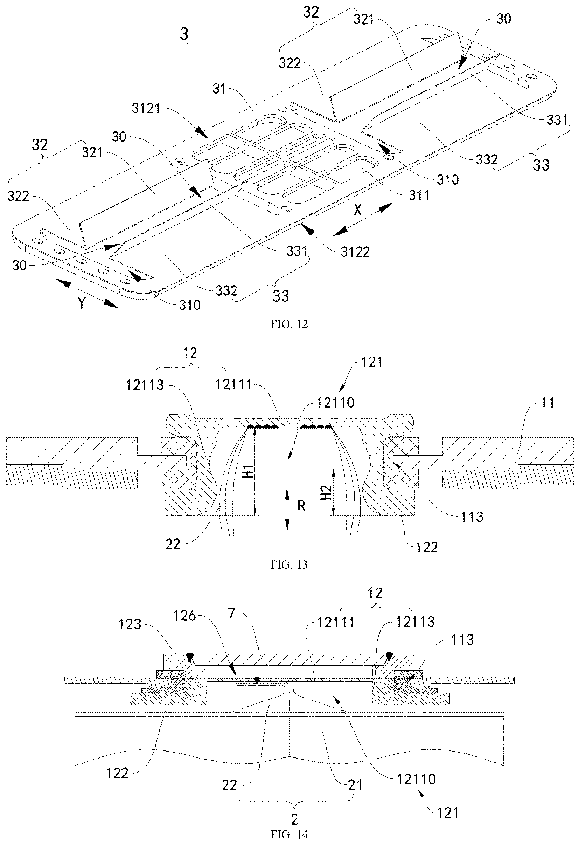

Referring to FIG. 12, FIG. 12 is a schematic diagram of a structure of a bracket 3 according to some other embodiments of the present application. The second connecting sheet 332 is located in the through hole 310, and the first end of the second connecting sheet 332 is connected to the hole wall of the through hole 310. The second connecting sheet 332 is disposed in the through hole 310, so that a space in the through hole 310 is effectively used, which can reduce the space occupied by the second guide portion 33 in the thickness direction of the bracket body 31, reduce the waste of the internal space of the housing 11, and improve the utilization of the internal space of the housing 11 as a whole.

There is a gap between two side edges of the second connecting sheet 332 that are disposed opposite to each other in the second direction and the hole wall of the through hole 310. The first end of the second connecting sheet 332 in the first direction is connected to a bracket body 31, the second end of the second connecting sheet 332 in the first direction is connected to the second guide sheet 331, and there is a gap between two sides of the second connecting sheet 332 that are oppositely disposed in the second direction and the hole wall of the through hole 310. Therefore, the second connecting sheet 332 may be formed as a cantilever structure with one end being a fixed end and the other end being a free end. In this way, the second connecting sheet 332 may be deformed under an external action.

Specifically, in a process in which the electrode assembly 2 is assembled into the housing 11 of the battery cell 10, when guiding the conductive portion 22 to run through the through hole 310, the second guide sheet 331 may be deformed under the stopping action of the electrode assembly 2 to be pressed against the second connecting sheet 332. Subsequently, the end surface of the electrode assembly 2 may further stop deformation of the second guide sheet 331 and the second connecting sheet 332, so that the second guide sheet 331 and the second connecting sheet 332 are accommodated in the through hole 310, to further reduce the space occupied by the second guide portion 33 in the thickness direction of the bracket body 31, reduce the waste of the internal space of the housing 11, and further improve the utilization of the internal space of the housing 11.

As shown in FIG. 5, FIG. 8, FIG. 9, and FIG. 12, the bracket body 31 is further provided with a breathable hole 311. The breathable hole 311 may be provided right opposite to an explosion-proof valve of the battery cell 10. In an optional solution, the breathable hole 311 is located in the middle of a length direction (for example, the direction X shown in the figure) of the bracket body 31, the bracket body 31 is provided with two through holes 310, and the two through holes 310 are provided in the length direction of the bracket body 31 and are located on two sides of the breathable hole 311.

Referring to FIG. 3 and FIG. 4 again, the present application provides a battery cell 10, including the housing 11 and the electrode assembly 2. An electrode terminal 12 is disposed on the housing 11. The electrode assembly 2 includes the conductive portion 22 and the active substance coated portion 21. The active substance coated portion 21 is disposed in the housing 11. The conductive portion 22 is electrically connected to the active substance coated portion 21 and the electrode terminal 12.

The battery cell 10 further includes the bracket 3, and the bracket 3 is the bracket 3 in any one of the foregoing embodiments. The bracket 3 is disposed in the housing body 111, and the bracket 3 is located at one end of the active substance coated portion 21 away from the housing cover 112.

The electrode terminal 12 includes a first electrode terminal 120, and the first electrode terminal 120 is disposed on a wall body of the housing body 111 opposite to the housing cover 112. The conductive portion 22 includes a first conductive portion 221. The first conductive portion 221 is disposed at one end of the active substance coated portion 21 away from the housing cover 112, the first conductive portion 221 runs through the through hole 310, and the first conductive portion 221 is electrically connected to the first electrode terminal 120. The first guide portion 32 is located between the active substance coated portion 21 and the first electrode terminal 120.

In the technical solution of the embodiments of the present application, the foregoing bracket 3 is used, so that in a process in which the electrode assembly 2 is assembled into the housing 11 of the battery cell 10, the first guide portion 32 of the bracket 3 may provide guidance on and protect the conductive portion 22 of the electrode assembly 2, to enable the conductive portion 22 of the electrode assembly 2 to gradually enter the through hole 310, thereby reducing the probability that the conductive portion 22 collides with the bracket body 31 of the bracket 3, reducing the risk that the electrode assembly 2 fails and is damaged, and improving the reliability and the stability of the battery cell 10.

Referring to FIG. 13 and FIG. 14, FIG. 13 is a local cross-sectional view of a battery cell 10 according to some embodiments of the present application; and FIG. 14 is a local cross-sectional view of a battery cell 10 according to some embodiments of the present application. An accommodating portion 121 is disposed on the first electrode terminal 120, the first conductive portion 221 is at least partially accommodated in the accommodating portion 121, and the first conductive portion 221 is electrically connected to the first electrode terminal 120. In other words, the first electrode terminal 120 is disposed to have a hollow structure.

At least partially means that the first conductive portion 221 may be entirely accommodated in the accommodating portion 121, or the first conductive portion 221 may be partially accommodated in the accommodating portion 121. Because the accommodating portion 121 is disposed on the first electrode terminal 120, the hollow structure of the accommodating portion 121 can reduce a weight of the first electrode terminal 120 to some extent, to improve a weight energy density of the battery cell 10 and the battery 100. In addition, the first conductive portion 221 can be accommodated in the accommodating portion 121, thereby improving assembly efficiency of the first conductive portion 221, further saving the space occupied by the first conductive portion 221, and fully using the space of the battery cell 10. In this way, cooperation between the bracket 3 and the first electrode terminal 120 and cooperation between the bracket 3 and the first conductive portion 221 are closer and more reliable, so that a structure of the battery cell 10 is more compact, thereby further facilitating improvement of an energy density of the battery cell 10.

More specifically, the first conductive portion 221 is partially or entirely accommodated in the accommodating portion 121, so that a part of the first conductive portion 221 that is located in the accommodating portion 121 can occupy a space in the first electrode terminal 120, to reduce the space occupied by the first conductive portion 221 in the housing 11. When a size of the housing 11 is fixed, some space can be saved in the housing 11, to accommodate the active substance coated portion 21 having a larger size, thereby improving a volume energy density of the battery cell 10. For example, when the first conductive portion 221 is led out from a side of the active substance coated portion 21 close to the first electrode terminal 120, the space occupied by the first conductive portion 221 between the active substance coated portion 21 and the first electrode terminal 120 can be saved, a size of the active substance coated portion 21 in a direction in which the first conductive portion 221 is led out can be enlarged, a spacing between the active substance coated portion 21 and the first electrode terminal 120 is reduced, and the energy density of the battery cell 10 is improved.

In addition, the first conductive portion 221 is at least partially accommodated in the accommodating portion 121, so that a space occupied by the battery cell 10 can be reduced, a greater quantity of battery cells 10 can be accommodated by the battery 100 having a same volume, and a volume energy density of the battery 100 can be further improved. In addition, the first conductive portion 221 is at least partially accommodated in the accommodating portion 121, to occupy the space in the first electrode terminal 120, so that redundancy of the first conductive portion 221 in the housing 11 can be reduced to at least some extent, a probability of a short circuit between the first conductive portion 221 and the active substance coated portion 21 is reduced, a probability of a short circuit of the battery cell 10 is reduced, and operation reliability and stability of the battery cell 10 and the battery 100 are improved.

It should be noted that, in the embodiments of the present application, a position of the accommodating portion 121 may be located on a side of the first electrode terminal 120 facing the active substance coated portion 21, or may be located on a side of the first electrode terminal 120 facing away from the active substance coated portion 21.

For example, referring to FIG. 13 and FIG. 14 again, when the accommodating portion 121 is located on a side of the first electrode terminal 120 facing the active substance coated portion 21, the accommodating portion 121 includes a first accommodating groove 12110, a surface of the first electrode terminal 120 that is on a side facing the active substance coated portion 21 is an electrode terminal inner end surface 122, a notch of the first accommodating groove 12110 is formed on the electrode terminal inner end surface 122, and the first conductive portion 221 is at least partially accommodated in the first accommodating groove 12110.

For example, the first accommodating groove 12110 is a groove body, and the groove body is of a groove-shaped structure having a specific depth. For example, when the first electrode terminal 120 is disposed on an upper end wall of the housing 11, and the electrode terminal inner end surface 122 is a lower surface of the first electrode terminal 120, the first accommodating groove 12110 is formed as an accommodating groove in which the notch is open downward and a groove wall recesses upward. For another example, when the first electrode terminal 120 is disposed on a lower end wall of the housing 11, and the electrode terminal inner end surface 122 is an upper surface of the first electrode terminal 120, the first accommodating groove 12110 is formed as an accommodating groove in which the notch is open upward and a groove wall recesses downward.

In the foregoing technical solution, providing the first accommodating groove 12110 on the first electrode terminal 120 can reduce a weight of the first electrode terminal 120 to some extent, to improve the weight energy density of the battery cell 10 and the battery 100. In addition, the notch of the first accommodating groove 12110 is formed on the electrode terminal inner end surface 122, and the electrode terminal inner end surface 122 is a surface of the first electrode terminal 120 that is on a side close to the active substance coated portion 21, so that the first accommodating groove 12110 may be open toward a direction of the active substance coated portion 21, to facilitate the first conductive portion 221 to extend into the first accommodating groove 12110, thereby improving the assembly efficiency. In addition, the first accommodating groove 12110 in this form is easily processed, thereby improving production efficiency.

In addition, the first accommodating groove 12110 can be easily processed to have a relatively large volume, and can accommodate more first conductive portions 221. In addition, because the first accommodating groove 12110 is open toward the direction of the active substance coated portion 21, the first accommodating groove 12110 may further serve as a buffering and temporary storage structure of an electrolyte solution, so that the housing 11 can accommodate more electrolyte solutions. Because the electrolyte solution is lost in a charging and discharging process of the battery cell 10, a service life of the battery cell can be prolonged when the battery cell 10 has more electrolyte solutions. In addition, because the first accommodating groove 12110 is open toward the direction of the active substance coated portion 21, the first accommodating groove 12110 may also serve as an accommodating and buffering structure for generated gas inside the electrode assembly 2, to reduce expansion of the battery cell 10, and improve the reliability and the stability of the battery cell 10.

In addition, because the first accommodating groove 12110 is located on an inner side of the first electrode terminal 120, foreign object impurities outside do not easily enter the first accommodating groove 12110, so that impact of the foreign object impurities on the electrode assembly 2 can be reduced, and stability and reliability of operation of the electrode assembly 2 can be improved, thereby improving the stability and the reliability of the battery cell 10 and the battery 100.

Referring to FIG. 13 again, in the embodiments of the present application, a connection manner between the first electrode terminal 120 and the housing 11 is not limited. For example, the connection manner may be a soldering connection, or may be a riveting connection. For example, when the first electrode terminal 120 and the housing 11 cooperate with each other through the riveting connection, the housing 11 is provided with a mounting hole 113, and the first electrode terminal 120 is riveted and mounted in the mounting hole 113. Certainly, it may be understood that, when the first electrode terminal 120 and the housing 11 cooperate with each other through the soldering connection or in another manner, the housing 11 may also be provided with the mounting hole 113, so that the first electrode terminal 120 can be mounted on the housing 11 through the mounting hole 113. This is not limited herein.

In addition, the first accommodating groove 12110 may be provided corresponding to the position of the mounting hole 113. Alternatively, on a projection surface perpendicular to an axial direction R of the first electrode terminal 120, an orthographic projection of the first accommodating groove 12110 is located within a range of an orthographic projection of the mounting hole 113, so that the first accommodating groove 12110 may have a relatively large depth, to accommodate more first conductive portions 221, thereby reducing the space occupied by the first conductive portion 221 in the housing 11 to a larger extent. Specifically, when the housing 11 is provided with the mounting hole 113, and the first electrode terminal 120 is mounted in the mounting hole 113, along the axial direction R of the first electrode terminal 120, a depth H1 of the first accommodating groove 12110 is greater than or equal to a minimum distance H2 between the electrode terminal inner end surface 122 and the mounting hole 113.

**It** should be noted that, a specific shape of the first accommodating groove 12110 is not limited. The first accommodating groove 12110 may be in a regular shape, or may be in an irregular shape, for example, a cylinder-shaped groove having a same cross section whose cross section is in a rectangular shape, an elliptic shape, or a racetrack shape, or a trapezoid-shaped groove whose cross section is in a rectangular shape and whose cross section size gradually changes, a hemisphere-shaped groove whose cross section is in a circular shape and whose cross section size gradually changes, or a semi-ellipsoid-shaped groove whose cross section is in an elliptic shape and whose cross section size gradually changes. Therefore, the depth H1 of the first accommodating groove 12110 refers to a maximum depth of the first accommodating groove 12110 along the axial direction R of the first electrode terminal 120.

Because in the axial direction R of the first electrode terminal 120, the depth H1 of the first accommodating groove 12110 is greater than or equal to the minimum distance H2 between the electrode terminal inner end surface 122 and the mounting hole 113, a volume of the first electrode terminal 120 can be fully used, so that the first accommodating groove 12110 has a relatively large depth, which is beneficial to accommodating more first conductive portions 221, thereby reducing the space occupied by the first conductive portion 221 in the housing 11 to a greater extent, further improving an energy density of the battery cell 10, and further reducing redundancy of the first conductive portion 221 in the housing 11. In addition, because the first accommodating groove 12110 has a relatively large depth, the first accommodating groove 12110 can also accommodate generated gas of the electrode assembly 2, to ensure the reliability and the stability of the battery cell 10, so that more electrolyte solutions can be further accommodated, to ensure a service life of the battery cell 10.

Referring to FIG. 13 and FIG. 14 again, to ensure stability and reliability of an electrical connection between the active substance coated portion 21 and the first electrode terminal 120, in some embodiments of the present application, an electrical connection position between the first conductive portion 221 and the first electrode terminal 120 may be located on a groove wall of the first accommodating groove 12110 formed by the accommodating portion 121.

For example, the electrical connection may be formed between the first conductive portion 221 and the first electrode terminal 120 through soldering, and the electrical connection position is a soldering position between the first conductive portion 221 and the first electrode terminal 120. In addition, a soldering manner between the first conductive portion 221 and the first electrode terminal 120 is not limited, for example, may be laser soldering, and vertical soldering, oblique soldering, lapping soldering, edge sealing soldering, or the like may be selected according to factors such as a position, an angle, or a structure of a soldering position. In another embodiment of the present application, to replace the soldering connection, the electrical connection between the first conductive portion 221 and the first electrode terminal 120 may be furthered implemented in another manner, for example, by disposing a conductive adhesive or a conductive nail. To simplify descriptions, descriptions are provided below by using an example in which the first conductive portion 221 is soldered to the first electrode terminal 120 to form the electrical connection, and a soldering position is the electrical connection position between the first conductive portion 221 and the first electrode terminal 120.

Specifically, the first electrode terminal 120 specifically includes a first end wall 12111 and a first side wall 12113. The first end wall 12111 is located on a side of the first side wall 12113 away from the active substance coated portion 21. The first end wall 12111 and the first side wall 12113 encircle and form the first accommodating groove 12110. The electrical connection position between the first conductive portion 221 and the first electrode terminal 120 is located on the first end wall 12111 and/or the first side wall 12113. In other words, the first conductive portion 221 may be soldered to at least one of the first end wall 12111 and the first side wall 12113.

In the foregoing technical solution, the electrical connection position between the first conductive portion 221 and the first electrode terminal 120 is disposed on at least one of the first end wall 12111 and the first side wall 12113, so that the first accommodating groove 12110 has a function of accommodating at least a part of the first conductive portion 221. In addition, a groove wall of the first accommodating groove 12110 further has a function of implementing an electrical connection to the first conductive portion 221, so that a structure of the first electrode terminal 120 can be simplified, thereby facilitating processing of the first electrode terminal 120. In addition, a structure of the first conductive portion 221 can be simplified, to reduce redundancy of the first conductive portion 221, and reduce costs of the first conductive portion 221. In addition, the electrical connection to the first conductive portion 221 is implemented by using the groove wall of the first accommodating groove 12110, so that an area in which the first conductive portion 221 is electrically connected to the first electrode terminal 120 can be set to be relatively large. This not only can reduce difficulty of the electrical connection, but also can improve reliability and stability of the electrical connection, thereby improving performance of the battery cell 10.

In addition, because the electrical connection position between the first conductive portion 221 and the first electrode terminal 120 is located in the first accommodating groove 12110, the electrical connection position can be prevented from projecting out of the first electrode terminal 120 and occupying a space outside the first electrode terminal 120. In addition, the electrical connection position can be protected by the first electrode terminal 120, to improve the reliability and the stability of the electrical connection between the first conductive portion 221 and the first electrode terminal 120.

In addition, in the embodiments of the present application, the first end wall 12111 is constructed as a closed structure with no piercing, to isolate the first accommodating groove 12110 from an external space of the housing 11, so that a problem that an electrolyte solution inside the housing 11 leaks out of the first accommodating groove 12110 can be avoided.

Referring to FIG. 13 and FIG. 14 again, in some optional embodiments, a local shape of the first conductive portion 221 and a local shape of the first end wall 12111 match each other and are closely disposed, and the electrical connection is implemented, so that a position at which the first conductive portion 221 is electrically connected to the first end wall 12111 extends along a length direction or a width direction of the first end wall 12111. For example, when the first end wall 12111 is a plane, a local part of the first conductive portion 221 may also be a plane and be attached to the first end wall 12111, and electrical connection, for example, soldering connection, is performed on a position at which the local part of the first conductive portion 221 is attached to the first end wall 12111. Therefore, an area of the electrical connection can be improved, and the reliability and the stability of the electrical connection is improved.

In addition, when the electrical connection between the first conductive portion 221 and the first end wall 12111 is the soldering connection, because the first end wall 12111 is located on a side of the first accommodating groove 12110 away from the active substance coated portion 21, it is convenient to perform a soldering operation. For example, soldering connection may be performed on a side of the first electrode terminal 120 away from the active substance coated portion 21.

It should be noted that, a shape of the first end wall 12111 is not limited, and may be, for example, a flat plate shape or an arc-shaped plate shape. When the first end wall 12111 is of a structure of the flat plate shape, the first end wall 12111 and the axial direction R of the first electrode terminal 120 are disposed at an angle. For example, the first end wall 12111 may be of a structure of a flat plate shape perpendicular to the axial direction R of the first electrode terminal 120, or may be of a structure of an inclined plate shape not perpendicular to the axial direction R of the first electrode terminal 120, but an inclined direction is not limited.

Certainly, in another embodiment of the present application, the position at which the first conductive portion 221 is electrically connected to the first end wall 12111 may alternatively not extend along the length direction or the width direction of the first end wall 12111, for example, may alternatively be a plurality of points that are discretely disposed. For example, the first conductive portion 221 has a plurality of parts that are disposed at intervals and are respectively soldered to the first end wall 12111. Details are not described herein again.

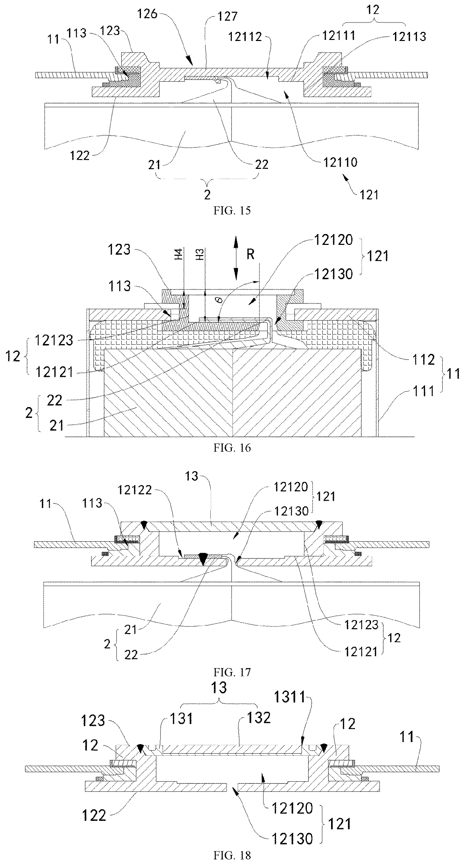

Referring to FIG. 15, FIG. 15 is a local cross-sectional view of a battery cell 10 according to some embodiments of the present application. When the first conductive portion 221 is electrically connected to the first end wall 12111, a first depressed groove 12112 may be provided on the first end wall 12111, and a recessing direction of the first depressed groove 12112 is a direction facing away from the active substance coated portion 21. The electrical connection position between the first conductive portion 221 and the first end wall 12111 is at least partially located in the first depressed groove 12112. For example, the first conductive portion 221 may be at least partially disposed in the first depressed groove 12112 and connected to a part of the first end wall 12111 that is configured to define the first depressed groove 12112.

In the foregoing technical solution, the first depressed groove 12112 may be configured to pre-position and limit the electrical connection location of the first conductive portion 221, which not only helps find a position to implement the electrical connection, thereby improving production efficiency, but also helps improve stability and reliability of the first conductive portion 221, thereby ensuring stability and reliability of a charging/discharging process of the battery cell 10. In addition, the first depressed groove 12112 is provided on the first end wall 12111, so that a local wall thickness of the first end wall 12111 can be locally thinned. This is not only beneficial to performing soldering connection, but also to reducing a weight of the first electrode terminal 120, thereby improving the weight energy density of the battery cell 10.

Referring to FIG. 14 and FIG. 15 again, in the embodiments of the present application, a first groove 126 may be further provided on the first electrode terminal 120 as required. The first groove 126 is located on a side of the first electrode terminal 120 away from the active substance coated portion 21. That is, a surface of the first electrode terminal 120 that is on a side away from the active substance coated portion 21 is the electrode terminal outer end surface 123, and a notch of the first groove 126 is formed on the electrode terminal outer end surface 123.

It may be understood that, the first groove 126 is a groove body, and the groove body is of a groove-shaped structure having a specific depth. In addition, when the first electrode terminal 120 is disposed on the upper end wall of the housing 11, and the electrode terminal outer end surface 123 is the upper surface of the first electrode terminal 120, the first groove 126 is formed as a first groove in which a notch is open upward, and a groove wall recesses downward (that is, recesses toward a square shape close to the electrode assembly 2). For another example, when the first electrode terminal 120 is disposed on the lower end wall of the housing 11, and the electrode terminal outer end surface 123 is the lower surface of the first electrode terminal 120, the first groove 126 is formed as a first groove in which a notch is open downward, and a groove wall recesses upward (that is, recesses toward a square shape away from the electrode assembly 2).

In the foregoing technical solution, because the first groove 126 is provided on the first electrode terminal 120, the weight of the first electrode terminal 120 can be further reduced, to improve the weight energy density of the battery cell 10 and the battery 100. In addition, the first groove 126 is located on an outer side of the first electrode terminal 120, that is, is open toward a side of the first electrode terminal 120 that faces away from the inside of the housing 11. The first groove 126 may be configured for accommodation or mounting of structural components that are in the battery 100 and that are electrically connected to each battery cell 10, to fully use the space in the first electrode terminal 120 and improve space utilization and the volume energy density of the battery 100.

In addition, because both the first accommodating groove 12110 and the first groove 126 are provided on the first electrode terminal 120, the first groove 126 is located on a side of the first accommodating groove 12110 away from the active substance coated portion 21, and the first groove 126 is open in a direction facing away from the first accommodating groove 12110, it is beneficial to performing laser soldering connection on the first conductive portion 221 and the first end wall 12111 through the first groove 126 from an outer side of the first electrode terminal 120, namely, a side of the first electrode terminal 120 away from the active substance coated portion 21. That is, it is beneficial to implementing the electrical connection between the first conductive portion 221 and the first electrode terminal 120 through an external soldering connection. In other words, through the foregoing structural disposition, external soldering connection may be conveniently performed on the first electrode terminal 120 and the first conductive portion 221 through the first groove 126, which facilitates processing and manufacturing of the battery cell 10, and reduces costs of processing and manufacturing.

Further, to conveniently and effectively perform soldering connection on the first conductive portion 221 and the groove wall of the first accommodating groove 12110 through the first groove 126, and improve reliability of the soldering connection on the first conductive portion 221 and the groove wall of the first accommodating groove 12110, in the embodiments of the present application, a part between the first groove 126 and the first accommodating groove 12110 may be connected to the first conductive portion 221 through laser soldering, that is, a spacing portion 127 shown in FIG. 15 is connected to the first conductive portion 221 through laser soldering, to implement the electrical connection between the electrode assembly 2 and the first electrode terminal 120. The spacing portion 127 of the first electrode terminal 120 that is located between the first groove 126 and the first accommodating groove 12110 has a relatively thin thickness. The spacing portion 127 isolates the first groove 126 from the first accommodating groove 12110. A side wall surface of the spacing portion 127 that is close to the active substance coated portion 21 may be used as the first end wall 12111. When the first conductive portion 221 needs to be soldered to the first end wall 12111, because the spacing portion 127 has a relatively thin thickness, it is beneficial to implementing soldering connection on the first conductive portion 221 and the first end wall 12111 through the first groove 126, to improve convenience and reliability of the soldering connection.

Referring to FIG. 14 again, further, the battery cell 10 may further include a groove cover 7. The groove cover 7 is disposed on the first electrode terminal 120 and covers the notch of the first groove 126. In the foregoing technical solution, the groove cover 7 covering the first groove 126 is disposed, so that the first electrode terminal 120 may be indirectly electrically connected to a bus component through the groove cover 7. A position and a structure of the groove cover 7 may be disposed, so that the electrical connection between the groove cover 7 and the bus component is more convenient and an electrical connection area is larger. Therefore, the groove cover 7 is disposed, which can facilitate an electrical connection between adjacent battery cells 10 in the battery 100. In addition, because a position at which the battery cells 10 are electrically connected to each other is located at the groove cover 7, the position can be isolated from the electrical connection position between the first conductive portion 221 and the first electrode terminal 120 through the first groove 126, and there is much less interference between the two positions, so that the stability and the reliability of the battery cells 10 can be further improved.

For example, referring to FIG. 16, FIG. 16 is a local cross-sectional view of a battery cell 10 according to some embodiments of the present application. The accommodating portion 121 may alternatively be disposed to include a second accommodating groove 12120. A surface of the first electrode terminal 120 that is on a side away from the active substance coated portion 21 is an electrode terminal outer end surface 123, a notch of the second accommodating groove 12120 is formed on the electrode terminal outer end surface 123, the second accommodating groove 12120 is in communication with inside of the housing 11 through a piercing 12130, and the first conductive portion 221 runs through the piercing 12130 and is at least partially accommodated in the second accommodating groove 12120.

It may be understood that, the second accommodating groove 12120 is a groove body, and the groove body is of a groove-shaped structure having a specific depth. For example, when the first electrode terminal 120 is disposed on an upper end wall of the housing 11, and the electrode terminal outer end surface 123 is an upper surface of the first electrode terminal 120, the second accommodating groove 12120 is formed as an accommodating groove in which the notch is open upward, and a groove wall recesses downward. For another example, when the first electrode terminal 120 is disposed on a lower end wall of the housing 11, and the electrode terminal outer end surface 123 is a lower surface of the first electrode terminal 120, the second accommodating groove 12120 is formed as an accommodating groove in which the notch is open downward, and a groove wall recesses upward.

In the foregoing technical solution, referring to FIG. 16 again, providing the second accommodating groove 12120 on the first electrode terminal 120 can reduce a weight of the first electrode terminal 120 to some extent, to improve the weight energy density of the battery cell 10 and the battery 100. In addition, the notch of the second accommodating groove 12120 is formed on the electrode terminal outer end surface 123, and the electrode terminal outer end surface 123 is a surface of the first electrode terminal 120 that is on a side away from the active substance coated portion 21, so that the second accommodating groove 12120 may be open in a direction facing away from the active substance coated portion 21. In this way, when the first conductive portion 221 is at least partially accommodated in the second accommodating groove 12120, accommodation and collation of the first conductive portion 221 may be easily implemented through the notch of the second accommodating groove 12120, and an electrical connection operation or the like between the first conductive portion 221 and the first electrode terminal 120 may be easily implemented through the notch of the second accommodating groove 12120, thereby reducing production difficulty of the battery cell 10, and improving the production efficiency of the battery cell 10.

In addition, because the second accommodating groove 12120 can be in communication with the inside of the housing 11 through a piercing 12130, the second accommodating groove 12120 may further serve as a buffering and temporary storage structure of the electrolyte solution, so that the housing 11 can accommodate more electrolyte solutions. Because the electrolyte solution is lost in a charging/discharging process of the battery cell 10, a service life of the battery cell 10 can be prolonged when the battery cell 10 has more electrolyte solutions. In addition, because the second accommodating groove 12120 can be in communication with the inside of the housing 11 through the piercing 12130, the second accommodating groove 12120 may also serve as an accommodating and buffering structure for generated gas inside the electrode assembly 2, to reduce expansion of the battery cell 10, and improve the reliability and the stability of the battery cell 10.

It should be noted that, when a second accommodating groove 12120 is provided in the accommodating portion 121, and the first conductive portion 221 runs through the piercing 12130 and is at least partially accommodated in the second accommodating groove 12120, the electrical connection position between the first conductive portion 221 and the first electrode terminal 120 is not limited. For example, when the first conductive portion 221 runs through the piercing 12130 and is at least partially accommodated in the second accommodating groove 12120, in the embodiments of the present application, the electrical connection position between the first conductive portion 221 and the first electrode terminal 120 is located on a hole wall of the piercing 12130 formed by the first electrode terminal 120.

In the foregoing technical solution, the electrical connection position between the first conductive portion 221 and the first electrode terminal 120 is set on the hole wall of the piercing 12130, so that it is convenient to perform an electrical connection operation on the first conductive portion 221 and the first electrode terminal 120 through the second accommodating groove 12120. In addition, when an area of the electrical connection between the first conductive portion 221 and the first electrode terminal 120 is relatively large, the electrical connection between the first conductive portion 221 and the first electrode terminal 120 may be used to seal the piercing 12130, to reduce sealing costs, reduce leakage of the electrolyte solution, and reduce sealing components.

Specifically, soldering connection may be performed between the first conductive portion 221 and the hole wall of the piercing 12130 at a position at which the piercing 12130 is connected to the second accommodating groove 12120, to facilitate operations. In addition, by controlling a soldering print, the piercing 12130 is sealed by using the soldering print and the first conductive portion 221, to improve a problem that the electrolyte solution inside the housing 11 leaks out of the piercing 12130.

For another example, when the first conductive portion 221 runs through the piercing 12130 and is at least partially accommodated in the second accommodating groove 12120, in some other embodiments of the present application, the electrical connection position between the first conductive portion 221 and the first electrode terminal 120 may be further located on the groove wall of the second accommodating groove 12120 formed by the first electrode terminal 120. In this way, the electrical connection operation is easily performed. For example, when the first conductive portion 221 is soldered to the groove wall of the second accommodating groove 12120 formed by the first electrode terminal 120, occurrence of a problem, such as a short circuit, caused by conductive particles generated through the soldering connection, entering the housing 11 can be reduced.

Referring to FIG. 16 again, the first electrode terminal 120 includes a second end wall 12121 and a second side wall 12123. The second end wall 12121 is located on a side of the second side wall 12123 close to the active substance coated portion 21. The second end wall 12121 and the second side wall 12123 encircle and form the second accommodating groove 12120. The piercing 12130 is provided on the second end wall 12121. The electrical connection position between the first conductive portion 221 and the first electrode terminal 120 is located on the second end wall 12121 and/or located on the second side wall 12123.

More specifically, the electrical connection may be formed between the first conductive portion 221 and the first electrode terminal 120 through the soldering connection. Therefore, a soldering connection position is the electrical connection position between the first conductive portion 221 and the first electrode terminal 120. In another embodiment of the present application, to replace the soldering connection, the electrical connection between the first conductive portion 221 and the first electrode terminal 120 may be furthered implemented in another manner, for example, by disposing a conductive adhesive or a conductive nail. Details are not described herein again.

To simplify descriptions, descriptions are provided below by using an example in which the first conductive portion 221 is soldered to the first electrode terminal 120 to form the electrical connection, and a soldering position is the electrical connection position between the first conductive portion 221 and the first electrode terminal 120. For example, in some embodiments, the electrical connection position between the first conductive portion 221 and the first electrode terminal 120 is located on the second end wall 12121 and/or the second side wall 12123. The first conductive portion 221 may be soldered to at least one of the second end wall 12121 and the second side wall 12123.

In the foregoing technical solution, the electrical connection position between the first conductive portion 221 and the first electrode terminal 120 is disposed on at least one of the second end wall 12121 and the second side wall 12123, so that the second accommodating groove 12120 has a function of accommodating at least a part of the first conductive portion 221. In addition, the groove wall of the second accommodating groove 12120 further has a function of implementing an electrical connection to the first conductive portion 221, so that a structure of the first electrode terminal 120 can be simplified, thereby facilitating processing of the first electrode terminal 120. In addition, because the piercing 12130 is provided on the second end wall 12121, it is convenient for the first conductive portion 221 to extend into the second accommodating groove 12120 through the piercing 12130, so that a structure of the first conductive portion 221 can be simplified, redundancy of the first conductive portion 221 is reduced, and costs of the first conductive portion 221 are reduced. In addition, an opening direction of the notch of the second accommodating groove 12120 enables the electrical connection operation to be easily performed on the first conductive portion 221 and the groove wall of the second accommodating groove 12120 through the notch of the second accommodating groove 12120, which can reduce difficulty of the electrical connection. In addition, the electrical connection to the first conductive portion 221 is implemented through the groove wall of the second accommodating groove 12120, so that an area of the electrical connection between the first conductive portion 221 and the first electrode terminal 120 can be relatively large, thereby improving the reliability and the stability of the electrical connection, and further improving the performance of the battery cell 10.

**In** addition, because the electrical connection position between the first conductive portion 221 and the first electrode terminal 120 is located in the second accommodating groove 12120, the electrical connection position can be prevented from projecting out of the first electrode terminal 120 and occupying a space outside the first electrode terminal 120. In addition, the electrical connection position can be protected by the first electrode terminal 120, to improve the reliability and the stability of the electrical connection between the first conductive portion 221 and the first electrode terminal 120.

Referring to FIG. 16 again, in some embodiments, a local shape of the first conductive portion 221 and a local shape of the second end wall 12121 match each other and are closely disposed, and the electrical connection is implemented, so that a position at which the first conductive portion 221 is electrically connected to the second end wall 12121 extends along a length direction or a width direction of the second end wall 12121. For example, when the second end wall 12121 is a plane, a local part of the first conductive portion 221 may also be a plane and be attached to the second end wall 12121, and electrical connection, for example, soldering connection, is performed on a position at which the local part of the first conductive portion 221 is attached to the first end wall 12111. Therefore, an area of the electrical connection can be improved, and the reliability and the stability of the electrical connection can be improved.

It should be noted that, a shape of the second end wall 12121 is not limited, and may be, for example, a flat plate shape or an arc-shaped plate shape. When the second end wall 12121 is of a structure of the flat plate shape, the second end wall 12121 and the axial direction R of the first electrode terminal 120 are disposed at an angle. For example, the second end wall 12121 may be of a structure of a flat plate shape perpendicular to the axial direction R of the first electrode terminal 120, or may be of a structure of an inclined plate shape not perpendicular to the axial direction R of the first electrode terminal 120, but an inclined direction is not limited.

For example, referring to FIG. 16 again, when the second end wall 12121 is of the structure of the flat plate shape, an angle θ between the second end wall 12121 and the axial direction R of the first electrode terminal 120 is equal to 90°. That is, the second end wall 12121 and the active substance coated portion 21 are equally spaced along a direction from the piercing 12130 to the second side wall 12123. Therefore, the soldering connection between the first conductive portion 221 and the second end wall 12121 is facilitated.

For another example, an angle θ between the second end wall 12121 and the axial direction R of the first electrode terminal 120 is greater than 90°. That is, the second end wall 12121 obliquely extends toward the direction close to the active substance coated portion 21 along a direction from the piercing 12130 to the second side wall 12123. Therefore, an extension distance of the first conductive portion 221 along the second end wall 12121 may be increased, to increase the reliability of the electrical connection. For example, an angle θ between the second end wall 12121 and the axial direction R of the first electrode terminal 120 may range from 90° to 145°, for example, 100°, 110°, 120°, 130°, or 140°. The second end wall 12121 can be easily processed and is easily electrically connected to the first conductive portion 221. In addition, the space in the first electrode terminal 120 can be relatively fully used to accommodate the first conductive portion 221.

For another example, an angle θ between the second end wall 12121 and the axial direction R of the first electrode terminal 120 is less than 90°. That is, the second end wall 12121 obliquely extends toward the direction away from the active substance coated portion 21 along a direction from the piercing 12130 to the second side wall 12123.

Therefore, an extension distance of the first conductive portion 221 along the second end wall 12121 may be increased, to increase the reliability of the electrical connection. For example, an angle θ between the second end wall 12121 and the axial direction R of the first electrode terminal 120 may range from 45° to 90°, for example, 50°, 60°, 70°, or 80°. The second end wall 12121 can be easily processed and is easily electrically connected to the first conductive portion 221. In addition, the space in the first electrode terminal 120 can be relatively fully used to accommodate the first conductive portion 221.

Certainly, the present application is not limited thereto. In another embodiment of the present application, the position at which the first conductive portion 221 is electrically connected to the second end wall 12121 may alternatively not extend along the length direction or the width direction of the second end wall 12121, for example, may alternatively be a plurality of points that are discretely disposed. For example, the first conductive portion 221 has a plurality of parts that are disposed at intervals and are respectively soldered to the second end wall 12121. Details are not described herein again.

Referring to FIG. 16 again, and further referring to FIG. 17, FIG. 17 is a local cross-sectional view of a battery cell 10 according to some embodiments of the present application. Regardless of a specific value of an angle θ between the second end wall 12121 and the axial direction R of the first electrode terminal 120, in the embodiments of the present application, when the first conductive portion 221 is electrically connected to the second end wall 12121, a second depressed groove 12122 may be provided on the second end wall 12121 as required. The second depressed groove 12122 is a groove formed by a local part of the second end wall 12121 recessing toward one end close to the active substance coated portion. The electrical connection position between the first conductive portion 221 and the second end wall 12121 is at least partially located in the second depressed groove 12122.

In the foregoing technical solution, the part of the first conductive portion 221 that is located in the second depressed groove 12122 and a shape of the second depressed groove 12122 are set to match each other, and are closely set to implement an electrical connection. The second depressed groove 12122 may be configured to pre-position and limit the electrical connection position of the first conductive portion 221, which is beneficial to finding a position to implement the electrical connection, improving production efficiency, and improving stability and reliability of the electrical connection position, so as to ensure reliability and stability of charging and discharging operations of the battery cell 10.

Referring to FIG. 17 again, in the embodiments of the present application, a connection manner between the first electrode terminal 120 and the housing 11 is not limited. For example, the connection manner may be soldering connection, or may be riveting connection. For example, when the first electrode terminal 120 and the housing 11 cooperate with each other through the soldering connection, the housing 11 is provided with the mounting hole 113, and the first electrode terminal 120 is riveted and mounted in the mounting hole 113. Certainly, it may be understood that, when the first electrode terminal 120 and the housing 11 cooperate with each other through the soldering connection or in another manner, the housing 11 may also be provided with the mounting hole 113, so that the first electrode terminal 120 is mounted in the mounting hole 113.

Optionally, referring to FIG. 16 again, the second accommodating groove 12120 may be provided corresponding to the position of the mounting hole 113. Alternatively, on a projection surface perpendicular to the axial direction R of the first electrode terminal 120, an orthographic projection of the second accommodating groove 12120 is located within a range of an orthographic projection of the mounting hole 113, so that the second accommodating groove 12120 may have a relatively large depth, to accommodate more first conductive portions 221, thereby reducing the space occupied by the first conductive portion 221 in the housing 11 to a larger extent.

In some embodiments, referring to FIG. 16 again, when the housing 11 is provided with the mounting hole 113, and the first electrode terminal 120 is mounted in the mounting hole 113, along the axial direction R of the first electrode terminal 120, a depth H3 of the second accommodating groove 12120 is greater than or equal to a minimum distance H4 between the electrode terminal outer end surface 123 and the mounting hole 113.

It should be noted that, a specific shape of the second accommodating groove 12120 is not limited. The second accommodating groove 12120 may be in a regular shape, or may be in an irregular shape, for example, a cylinder-shaped groove having a same cross section whose cross section is in a rectangular shape, an elliptic shape, or a racetrack shape, or a trapezoid-shaped groove whose cross section is in a rectangular shape and whose cross section size gradually changes, a hemisphere-shaped groove whose cross section is in a circular shape and whose cross section size gradually changes, or a semi-ellipsoid-shaped groove whose cross section is in an elliptic shape and whose cross section size gradually changes. It should be noted that, the racetrack shape described in this specification refers to a shape in which two short sides of a rectangle are replaced with convex curves.

Therefore, the depth H3 of the second accommodating groove 12120 refers to a maximum depth of the second accommodating groove 12120 along the axial direction R of the first electrode terminal 120. Because in the axial direction R of the first electrode terminal 120, the depth H3 of the second accommodating groove 12120 is greater than or equal to the minimum distance H4 between the electrode terminal outer end surface 123 and the mounting hole 113, a volume of the first electrode terminal 120 can be fully used, so that the second accommodating groove 12120 has a relatively large depth, which is beneficial to accommodating more first conductive portions 221, thereby reducing the space occupied by the first conductive portion 221 in the housing 11 to a greater extent, further improving an energy density of the battery cell 10, and further reducing redundancy of the first conductive portion 221 in the housing 11. In addition, because the second accommodating groove 12120 has a relatively large depth, the second accommodating groove 12120 can also accommodate generated gas of the electrode assembly 2, to ensure the reliability and the stability of the battery cell 10, so that more electrolyte solutions can be further accommodated, to ensure a service life of the battery cell 10.

Referring to FIG. 17, and further referring to FIG. 18, FIG. 18 is a local cross-sectional view of a battery cell 10 according to some embodiments of the present application. In the embodiments of the present application, when the second accommodating groove 12120 in any one of the foregoing embodiments is provided in the accommodating portion 121, optionally, the battery cell 10 may further include a cover plate 13. The cover plate 13 cooperates with the first electrode terminal 120, and closes the notch of the second accommodating groove 12120. The cover plate 13 is electrically connected to the first electrode terminal 120.

In the foregoing technical solution, the cover plate 13 is disposed to close the notch of the second accommodating groove 12120, to prevent the electrolyte solution in the housing 11 from leaking out of the notch of the second accommodating groove 12120. In addition, because the cover plate 13 closes the notch of the second accommodating groove 12120 and is electrically connected to the first electrode terminal 120, an indirect electrical connection between the first electrode terminal 120 and the bus component can be easily implemented by using the cover plate 13, which is beneficial to enlarging a connection area of the electrical connection position, and is further beneficial to reducing resistance of the electrical connection position.

It should be noted that, a cooperation manner and a cooperation position between the cover plate 13 and the first electrode terminal 120 are not limited, provided that the cover plate 13 can close the notch of the second accommodating groove 12120. For example, in some embodiments, the cover plate 13 may be soldered to the first electrode terminal 120. During processing, the first conductive portion 221 may first run through the piercing 12130 and be soldered to the groove wall of the second accommodating groove 12120, and then the cover plate 13 is soldered to the first electrode terminal 120, to close the notch of the second accommodating groove 12120.

It should be further noted that, specific composition of the cover plate 13 is not limited. For example, in some optional embodiments, referring to FIG. 18, the cover plate 13 includes a first conductive member 131 and a second conductive member 132 that are made of different materials. The first conductive member 131 cooperates with and is electrically connected to the first electrode terminal 120, and the second conductive member 132 cooperates with and is electrically connected to the first conductive member 131.

In the foregoing technical solution, the cover plate 13 is set in a composite form, and the first conductive member 131 is disposed to be made of a material the same as that of the first electrode terminal 120, to facilitate the electrical connection between the first conductive member 131 and the first electrode terminal 120. For example, the first conductive member 131 is reliably and stably connected to the first electrode terminal 120 through the soldering connection in an easy manner. In addition, because a material of the second conductive member 132 is different from a material of the first conductive member 131, it is convenient to use the second conductive member 132 to be electrically connected to a bus component made of a material different from that of the first electrode terminal 120. For example, the second conductive member 132 is reliably and stably connected to a bus component made of a material the same as that of the second conductive member 132 through the soldering connection in an easy manner.

For example, when the first electrode terminal 120 is a negative electrode terminal, the first electrode terminal 120 is a copper electrode terminal, and the bus component is an aluminum sheet, the first conductive member 131 may be disposed to be made of a copper material, and the second conductive member 132 may be disposed to be made of an aluminum material. In this case, because the first electrode terminal 120 and the first conductive member 131 are made of the same material, the first electrode terminal 120 may be effectively soldered to the first conductive member 131, and because the second conductive member 132 and the bus component are made of the same material, the second conductive member 132 may be effectively soldered to the bus component, to effectively implement the indirect electrical connection between the first electrode terminal 120 and the bus component through the cover plate 13. In addition, the soldering connection between the first electrode terminal 120 and the first conductive member 131 means a soldering connection between copper materials, there is good flowability, and cracks are not easily generated, which is beneficial to improving a sealing effect of a soldering joint.

Referring to FIG. 18 again, in some optional examples, the first conductive member 131 is located between the second accommodating groove 12120 and the second conductive member 132. In the foregoing technical solution, because the first conductive member 131 is located between the second accommodating groove 12120 and the second conductive member 132, the second accommodating groove 12120 and the second conductive member 132 may be separated. In this way, when the electrolyte solution in the housing 11 enters the second accommodating groove 12120 from the piercing 12130, the first conductive member 131 may be used to prevent the part of the electrolyte solution from contacting the second conductive member 132, to resolve a problem that the electrolyte solution causes corrosion to the second conductive member 132.

It should be noted that, a cooperation manner between the first conductive member 131 and the second conductive member 132 is not limited. For example, in some embodiments, referring to FIG. 18, a second groove 1311 is provided on the first conductive member 131. The second conductive member 132 is embedded in the second groove 1311, and a notch of the second groove 1311 is formed on a surface of the first conductive member 131 that is on a side away from the second accommodating groove 12120, so that the second conductive member 132 is exposed from the notch of the second groove 1311. Alternatively, in another embodiment, a connection manner between the first conductive member 131 and the second conductive member 132 may be further a fixed connection, a clamping connection, or the like.

It should be further noted that, "exposed" in the case in which the second conductive member 132 is exposed from the notch of the second groove 1311 means that the first conductive member 131 does not block the second conductive member 132 at the position of the notch of the second groove 1311, and the second conductive member 132 is not required to project out of the notch of the second groove 1311. For example, the second conductive member 132 may be a surface that is flush with a side of the first conductive member 131 away from the second accommodating groove 12120, or the second conductive member 132 may be a surface that projects out of a side of the first conductive member 131 away from the second accommodating groove 12120.

In the foregoing technical solution, the second conductive member 132 is embedded in the first conductive member 131, to reduce assembly difficulty between the first conductive member 131 and the second conductive member 132, and improve stability and convenience of cooperation between the first conductive member 131 and the second conductive member 132. In addition, a thickness of the cover plate 13 can be reduced, and a space occupied by the cover plate 13 is reduced, to improve space utilization of the battery cell 10. In addition, because the second conductive member 132 may be exposed, through the notch of the second groove 1311, from a surface of the first conductive member 131 that is on a side away from the second accommodating groove 12120, it is beneficial to implementing an electrical connection between the second conductive member 132 and the bus component outside the first electrode terminal 120.

In addition, because the notch of the second groove 1311 is formed on the surface of the first conductive member 131 that is on a side away from the second accommodating groove 12120, it indicates that the second groove 1311 is open in a direction facing away from the active substance coated portion 21. In this way, a part of the first conductive member 131 that is configured to define the groove wall of the second groove 1311 is located between the second accommodating groove 12120 and the second conductive member 132, to separate the second accommodating groove 12120 and the second conductive member 132, so as to prevent the electrolyte solution entering the second groove 1311 from contacting the second conductive member 132, thereby reducing leakage of the electrolyte solution.

Certainly, in another embodiment, the cover plate 13 may not be in a composite form formed by a plurality of materials. For example, in another embodiment of the present application, the whole cover plate 13 may also be disposed to be in a non-composite form that is processed by using a same material, for example, the cover plate 13 is configured to be adapted to a positive electrode terminal. Details are not described herein.

Referring to FIG. 18 again, the cover plate 13 is further embedded at the notch of the second accommodating groove 12120. In the foregoing technical solution, the cover plate 13 is embedded in the second accommodating groove 12120, so that assembly difficulty between the cover plate 13 and the first electrode terminal 120 can be reduced, assembly stability between the cover plate 13 and the first electrode terminal 120 and reliability and convenience of the connection can be improved, and a space, other than a space occupied by the first electrode terminal 120, that is occupied by the cover plate 13 can be reduced. In addition, because the cover plate 13 is embedded at the notch of the second accommodating groove 12120, the second accommodating groove 12120 can have enough spaces to accommodate the first conductive portion 221.

Certainly, in another embodiment of the present application, a cooperation manner between the cover plate 13 and the first electrode terminal 120 is not limited to being embedded in the second accommodating groove 12120. The cover plate 13 may further directly cover outside the first electrode terminal 120, that is, directly cover the notch of the second accommodating groove 12120, to facilitate cooperation with the bus component of the battery 100. This is not limited in this embodiment.

Referring to FIG. 10 again, a part of a projection of the first guide portion 32 on a plane on which the piercing 12130 is located is located in the piercing 12130. In this way, the first conductive portion 221 runs through the piercing 12130 under guiding of the first guide portion 32, to facilitate a connection between the first conductive portion 221 and the first electrode terminal 120, so as to further reduce a probability that the first conductive portion 221 collides with the first electrode terminal 120, reduce a risk that the electrode assembly 2 fails and is damaged, and improve the reliability and the stability of the battery cell 10.

In an optional solution, there are two first electrode terminals 120, the bracket 3 is provided with two through holes 310, and the two first electrode terminals 120 cooperate with the two through holes 310 in one-to-one correspondence. In a process in which the electrode assembly 2 is assembled into the housing 11 of the battery cell 10, two first guide portions 32 on the bracket body 31 may simultaneously provide guidance on and protect the two first conductive portions 221 of the electrode assembly 2, so that the two first conductive portions 221 may simultaneously enter through holes 310 at corresponding positions, to facilitate a connection between each first conductive portion 221 and the first electrode terminal 120 at a corresponding position, which is beneficial to improving the production efficiency.

The present application further provides a battery 100, including the battery cell 10 according to any one of the foregoing solutions. In the technical solution of the embodiments of the present application, reliability and stability of the battery 100 can be improved by using the battery cell 10.

The present application further provides a power consuming apparatus 1000, including the battery cell 10 in any one of the foregoing solutions, or including the battery 100 in the foregoing solutions. In addition, the battery 100 is configured to provide electrical energy for the power consuming apparatus 1000. The power consuming apparatus 1000 may be any device or system in which the foregoing battery 100 is used. In the technical solution of the embodiments of the present application, the foregoing battery 100 or battery cell 10 is used, so that reliability and stability of the power consuming apparatus 1000 can be improved.

Finally, it should be noted that, the foregoing embodiments are only used to illustrate the technical solution of the present application, not to limit it. Although the present applicant has been described in detail with reference to the foregoing embodiments, it should be understood by a person of ordinary skill in the art that the technical solution described in the foregoing embodiments can still be modified or some or all of the technical features thereof can be equivalently replaced. However, these modifications or substitutions do not depart the essence of the corresponding technical solution from the scope of the technical solution of each embodiment of the present application, and should be covered in the scope of the claims and descriptions of the present application. Especially, as long as there is no structural conflict, the various technical features mentioned in each embodiment can be combined in any way. The present application is not limited to the particular embodiments disclosed herein, but includes all technical solutions that fall within the scope of the claims.

## Claims

1. A bracket, comprising:
a bracket body, provided with a through hole, wherein the through hole is used to expose a part of an electrode terminal; and
a first guide portion, disposed in the bracket body and configured to guide a conductive portion of an electrode assembly to run through the through hole to be connected to the electrode terminal.

2. The bracket according to claim 1, wherein the first guide portion comprises a first guide sheet, and the first guide sheet obliquely extends in a direction away from the bracket body; and the first guide sheet is configured to be capable of moving toward a direction close to the bracket body under an action of the electrode assembly, to be pressed between the electrode assembly and the electrode terminal.

3. The bracket according to claim 2, wherein the first guide sheet is disposed on a first side of the bracket body in an axial direction of the through hole and an angle between the first guide sheet and a surface on the first side of the bracket body is less than or equal to 75°.

4. The bracket according to claim 2 or 3, wherein the first guide portion further comprises a first connecting sheet, a first end of the first connecting sheet in a first direction is connected to the bracket body, a second end of the first connecting sheet in the first direction extends toward a center position of the through hole and is connected to the first guide sheet, and the first guide sheet is configured to be capable of moving toward the direction of the bracket body under the action of the electrode assembly, to be pressed between the electrode assembly and the first connecting sheet.

5. The bracket according to claim 4, wherein the first connecting sheet and the first guide sheet are integrally formed.

6. The bracket according to claim 4 or 5, wherein both a thickness of the first guide sheet and a thickness of the first connecting sheet are less than a thickness of the bracket body.

7. The bracket according to any one of claims 4 to 6, wherein the first end of the first connecting sheet is connected to the surface on the first side of the bracket body in the axial direction of the through hole.

8. The bracket according to any one of claims 4 to 6, wherein the first connecting sheet is located in the through hole and the first end of the first connecting sheet is connected to a hole wall of the through hole.

9. The bracket according to any one of claims 4 to 8, wherein there is a gap between two side edges of the first connecting sheet that are disposed opposite to each other in a second direction and the hole wall of the through hole.

10. The bracket according to any one of claims 2 to 9, further comprising:
a second guide portion, disposed on the bracket body and disposed opposite to the first guide portion, and configured to guide the conductive portion of the electrode assembly to run through the through hole to be connected to the electrode terminal.

11. The bracket according to claim 10, wherein the second guide portion comprises a second guide sheet, and the second guide sheet obliquely extends in the direction away from the bracket body; and the second guide sheet is configured to be capable of moving toward the direction close to the bracket body under the action of the electrode assembly, to be pressed between the electrode assembly and the electrode terminal.

12. The bracket according to claim 11, wherein a via that is in communication with the through hole is defined between the second guide sheet and the first guide sheet, and the second guide sheet and the first guide sheet obliquely extend in a direction away from the via.

13. The bracket according to claim 12, wherein the via is an elongated hole, and the first guide sheet and the second guide sheet are disposed opposite to each other in a width direction of the elongated hole.

14. The bracket according to any one of claims 11 to 13, wherein the second guide portion further comprises a second connecting sheet, a first end of the second connecting sheet in the first direction is connected to the bracket body, a second end of the second connecting sheet in the first direction extends toward the center position of the through hole and is connected to the second guide sheet, and the second guide sheet is configured to be capable of moving toward the direction of the bracket body under the action of the electrode assembly, to be pressed between the electrode assembly and the second connecting sheet.

15. The bracket according to any one of claims 10 to 14, wherein a structure of the first guide portion is the same as a structure of the second guide portion.

16. A battery cell, comprising:
a housing, wherein an electrode terminal is disposed on the housing, the housing comprises a housing cover and a housing body having an opening, and the housing cover covers the opening;
an electrode assembly, comprising a conductive portion and an active substance coated portion disposed in the housing, wherein the conductive portion is electrically connected to the active substance coated portion and the electrode terminal; and
a bracket, wherein the bracket is the bracket according to any one of claims 1 to 15, and the bracket is disposed in the housing body and is located at one end of the active substance coated portion away from the housing cover, wherein
the electrode terminal comprises a first electrode terminal, the first electrode terminal is disposed on a wall body of the housing body opposite to the housing cover, the conductive portion comprises a first conductive portion, the first conductive portion is disposed at one end of the active substance coated portion away from the housing cover, the first conductive portion runs through a through hole and is electrically connected to the first electrode terminal, and a first guide portion is located between the active substance coated portion and the first electrode terminal.

17. The battery cell according to claim 16, wherein an accommodating portion is disposed on the first electrode terminal, and the first conductive portion is at least partially accommodated in the accommodating portion and is electrically connected to the first electrode terminal.

18. The battery cell according to claim 17, wherein the accommodating portion comprises a first accommodating groove, a surface of the first electrode terminal that is on a side facing the active substance coated portion is an electrode terminal inner end surface, a notch of the first accommodating groove is formed on the electrode terminal inner end surface, and the first conductive portion is at least partially accommodated in the first accommodating groove.

19. The battery cell according to claim 17, wherein the accommodating portion comprises a second accommodating groove, a surface of the first electrode terminal that is on a side away from the active substance coated portion is an electrode terminal outer end surface, a notch of the second accommodating groove is formed on the electrode terminal outer end surface, the second accommodating groove is in communication with inside of the housing through a piercing, and the first conductive portion runs through the piercing and is at least partially accommodated in the second accommodating groove.

20. The battery cell according to claim 19, wherein a part of a projection of the first guide portion on a plane on which the piercing is located is located in the piercing.

21. The battery cell according to claim 16, wherein there are two first electrode terminals, and two through holes are provided on the bracket.

22. A battery, comprising the battery cell according to any one of claims 16 to 21.

23. A power consuming apparatus, comprising the battery cell according to any one of claims 16 to 21; or comprising the battery according to claim 22.
